# EUROPEAN PATENT APPLICATION

(11) **EP 4 481 556 A1**
(43) Date of publication of application: **25.12.2024**
(21) Application number: 23787654.5
(22) Date of filing: 10.04.2023
(51) Int. Cl.: G06F 8/38, G06F 3/14

(54) **DISPLAY METHOD AND ELECTRONIC DEVICE**

(30) Priority: 15.04.2022 CN 202210395816
(71) Applicant: Huawei Technologies Co., Ltd., Shenzhen, Guangdong 518129 (CN)
(72) Inventor: YANG, Shimiao, Shenzhen, Guangdong 518129 (CN); LI, Dawei, Shenzhen, Guangdong 518129 (CN); XU, Zhechu, Shenzhen, Guangdong 518129 (CN)
(74) Representative: Gill Jennings & Every LLP
(86) International application number: PCT/CN2023/087396
(87) International publication number: WO 2023/198010

(57) **Abstract**

Embodiments of this application disclose a display method and an electronic device, and relate to the field of terminal technologies, to resolve a problem that an application is difficult to be developed and cannot adapt to a screen of a new specification in a current solution. The display method includes: The electronic device generates a first page based on first page data corresponding to a to-be-displayed application interface, where the first page data includes original element data, original layout data, and an original rendering size; if a size of a display does not match the original rendering size, generates a second page after proportionally zooming in/out a size of the first page, the original element data, and the original layout data based on a zoom-in/out ratio; generates third page data based on the size of the display, a preset page rearrangement rule, and second page data included in the second page, and generates a third page based on the third page data; and then displays the third page on the display. Embodiments of this application are applied to a process of displaying a user interface.

## Description

This application claims priority to Chinese Patent Application No. 202210395816.3, filed with the China National Intellectual Property Administration on April 15, 2022, and entitled "DISPLAY METHOD AND ELECTRONIC DEVICE", which is incorporated herein by reference in its entirety.

### TECHNICAL FIELD

Embodiments of this application relate to the field of terminal technologies, and in particular, to a display method and an electronic device.

### BACKGROUND

With development of science and technology, the world has currently become a world of "all things intelligent". An increasing quantity of electronic devices such as a home device, a mobile phone, a tablet (Pad), a personal computer (personal computer, PC), a television, and an automotive central console can run various applications (applications, apps), and provide various functions or services for a user by using these apps.

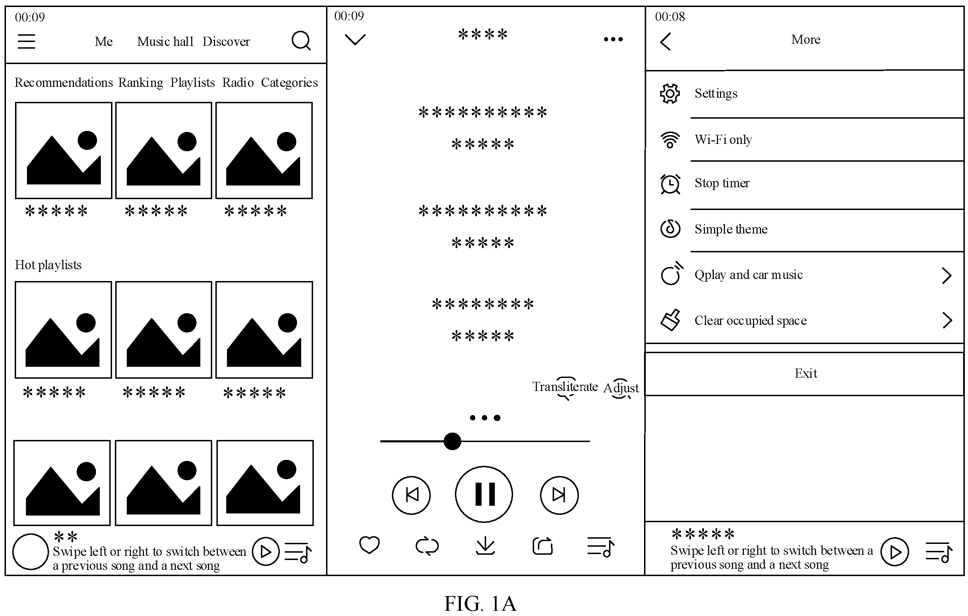

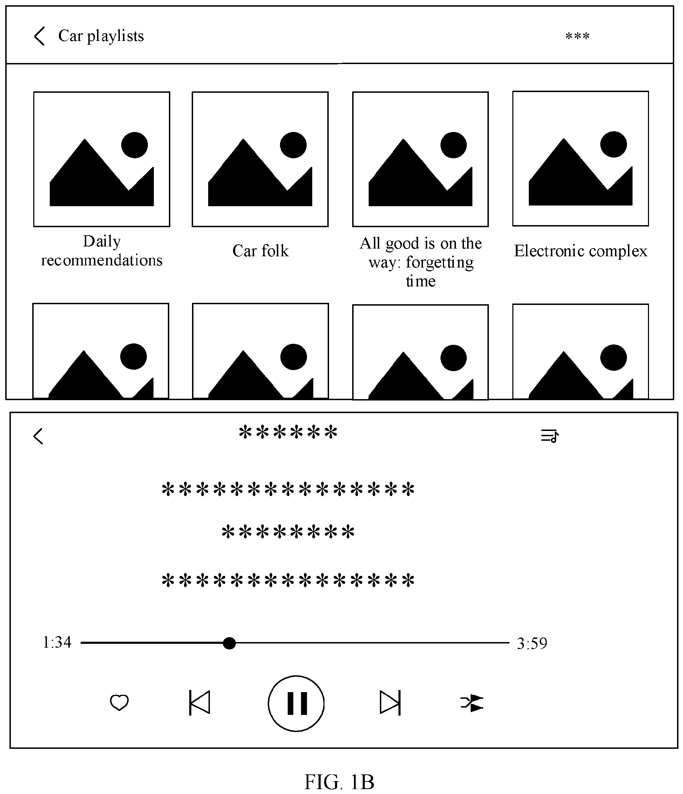

Many intelligent electronic devices have a display used as a medium for interaction with the user. However, displays of different electronic devices have different sizes, aspect ratios, resolutions, and the like. This brings a challenge to an app developer. To ensure good user experience, the developer needs to design different user interfaces based on screen specifications of different electronic devices. For example, FIG. 1A and FIG. 1B show two different user interfaces designed by a music app developer: a user interface (as shown in FIG. 1A) on a mobile phone of a specific model and a user interface (as shown in FIG. 1B) on the automotive central console.

In an early solution, the developer develops a matching app version for each type of electronic device. However, as forms of electronic device increase, development difficulty increases. Accordingly, another solution appears: Several sets of interface layout styles for different screen specifications are preset in an app, and an interface layout style adapted to an electronic device is selected based on the electronic device running the app. For example, for an interface whose user interface is a web (Web)-type interface, layout information such as a location and a size of an element in the web-type interface is generally defined in a cascading style sheet (cascading style sheet, CSS) style. The CSS can set screen specifications corresponding to different screen layout styles. In this way, different layout styles can be applied to different screen specifications. In this solution, a quantity of to-be-developed app versions is reduced to some extent, but different user interfaces still need to be designed in advance for different screen specifications. Because styles of the pre-designed user interfaces are limited, the user interfaces cannot adapt to a screen of a new specification, and development difficulty for the developer is high.

### SUMMARY

To resolve the foregoing technical problem, this application provides a display method and an electronic device. According to a technical solution provided in this application, an application interface can be adaptively displayed, to meet a requirement of displaying a same application by electronic devices of different device types, so as to reduce design difficulty, and improve user experience.

To achieve the foregoing technical objective, embodiments of this application provide the following technical solutions.

According to a first aspect, a display method is provided. The method includes: An electronic device generates a first page based on first page data corresponding to a to-be-displayed application interface, where the first page data includes original element data, original layout data, and an original rendering size; if a size of a display of the electronic device does not match the original rendering size, the electronic device generates a second page after proportionally zooming in/out a size of the first page, the original element data, and the original layout data based on a zoom-in/out ratio, where the zoom-in/out ratio is determined based on the size of the display and the original rendering size; the electronic device generates third page data based on the size of the display, a preset page rearrangement rule, and second page data included in the second page, and generates a third page based on the third page data; and then the electronic device displays the third page on the display.

For example, the zoom-in/out ratio is a ratio of a width of the display to the width in the original rendering size; and/or the zoom-in/out ratio is a ratio of a height of the display to a height in the original rendering size.

For example, that the size of the display of the electronic device does not match the original rendering size includes: The width of the display of the electronic device is greater than the width in the original rendering size; and/or the height of the display of the electronic device is greater than the height in the original rendering size.

In this way, one size of original user interface of the electronic device can be adaptively adjusted based on screen specifications of different electronic devices, to be adaptive to electronic devices of different screen specifications, so as to improve user experience.

In addition, for an application developer, in an application development process, only an interface layout that is adapted to one type of the display of the electronic device is developed, and deployment requirements of a plurality of types of electronic devices for the application can be met. This improves application development efficiency and reduces application development costs.

In a possible design, a value of the original rendering size is a preset value. Alternatively, a value of the original rendering size is a size of an original display, and the size of the original display is the size of the display based on which the developer designs an interface of an application in the application development process. The preset value is generally a rendering size commonly used in the industry.

In a possible design, if the value of the original rendering size is the preset value, the value of the original rendering size may be set to the preset value by performing the following steps: parsing preset code in a process of rendering the first page, to obtain the preset value; and setting the value of the original rendering size to the preset value.

For example, the preset code is scripting language JavaScript code.

In a possible design, after the electronic device displays the third page, the size of the display of the electronic device may change. In one case, the size of the display of the electronic device becomes larger. Correspondingly, after the electronic device displays the third page on the display, the method further includes: The electronic device determines that the size of the display changes from a first size to a second size, where the second size is greater than the first size. For example, the display of the electronic device is a foldable display. Correspondingly, that the electronic device determines that the size of the display changes from the first size to the second size includes: The electronic device determines that the display changes from a folded state to an expanded state, where a size of the display in the folded state is the first size, a size of the display in the expanded state is the second size, and the third page is a page displayed by the electronic device when the display is in the folded state. Then the electronic device generates a fourth page after proportionally zooming in, based on a zoom-in ratio, a size of the third page and the third page data included in the third page, where the zoom-in ratio is determined based on the second size and the first size. The electronic device generates fifth page data based on the second size, the preset page rearrangement rule, and fourth page data included in the fourth page, and generates a fifth page based on the fifth page data. Finally, the electronic device displays the fifth page on the display.

In this way, if the display of the electronic device becomes larger, for example, the display changes from a narrow screen to a wide screen, for example, a foldable mobile phone changes from the folded state to the expanded state, the electronic device may further adjust the third page to obtain and display the fifth page applicable to the wide screen.

In a possible design, after the electronic device displays the third page, the size of the display of the electronic device may change. In one case, the size of the display of the electronic device becomes smaller. Correspondingly, after the electronic device displays the third page on the display, the method further includes: The electronic device determines that the size of the display changes from a first size to a second size, where the second size is less than the first size. For example, the display of the electronic device is a foldable display. Correspondingly, that the electronic device determines that the size of the display changes from the first size to the second size includes: The electronic device determines that the display changes from an expanded state to a folded state, where a size of the display in the expanded state is the first size, a size of the display in the folded state is the second size, and the third page is a page displayed by the electronic device when the display is in the expanded state. Then the electronic device determines the second page corresponding to the third page. The electronic device generates a fourth page after proportionally zooming out the second page and the second page data based on the zoom-out ratio, where the zoom-out ratio is determined based on the second size and the first size. Finally, the electronic device displays the fourth page on the display.

In this way, if the display of the electronic device becomes smaller, for example, the display changes from a wide screen to a narrow screen, for example, a foldable mobile phone changes from the expanded state to the folded state, the electronic device may perform disabling rearrangement based on the third page, and adjust a zoom-in/out ratio to obtain and display the fifth page applicable to the narrow screen.

According to a second aspect, an electronic device is provided. The electronic device includes a processor, a memory, and a display. The memory and the display are coupled to the processor. The memory is configured to store computer program code. The computer program code includes computer instructions. When the processor reads the computer instructions from the memory, the electronic device is enabled to perform the following operations: the electronic device generates a first page based on first page data corresponding to a to-be-displayed application interface, where the first page data includes original element data, original layout data, and an original rendering size; if a size of a display of the electronic device does not match the original rendering size, the electronic device generates a second page after proportionally zooming in/out a size of the first page, the original element data, and the original layout data based on a zoom-in/out ratio, where the zoom-in/out ratio is determined based on the size of the display and the original rendering size; then the electronic device generates third page data based on the size of the display, a preset page rearrangement rule, and second page data included in the second page, and generates a third page based on the third page data; and finally, the electronic device displays the third page on the display.

In a possible design, a value of the original rendering size is a preset value.

In a possible design, when the processor reads the computer instructions from the memory, the electronic device is further enabled to perform the following operations: parsing preset code in a process of rendering the first page, to obtain the preset value; and setting the value of the original rendering size to the preset value.

In a possible design, the preset code is scripting language JavaScript code.

In a possible design, when the processor reads the computer instructions from the memory, the electronic device is further enabled to perform the following operations: the electronic device determines that the size of the display changes from a first size to a second size, where the second size is greater than the first size; the electronic device generates a fourth page after proportionally zooming in, based on a zoom-in ratio, a size of the third page and a size of an element in the third page, where the zoom-in ratio is determined based on the second size and the first size; the electronic device generates fifth page data based on the second size, the preset page rearrangement rule, and fourth page data included in the fourth page, and generates a fifth page based on the fifth page data; and then the electronic device displays the fifth page on the display.

In a possible design, the display of the electronic device is a foldable display. Correspondingly, that the electronic device determines that the size of the display changes from the first size to the second size includes: The electronic device determines that the display changes from a folded state to an expanded state, where a size of the display in the folded state is the first size, a size of the display in the expanded state is the second size, and the third page is a page displayed by the electronic device when the display is in the folded state.

In a possible design, when the processor reads the computer instructions from the memory, the electronic device is further enabled to perform the following operations: the electronic device determines that the size of the display changes from a first size to a second size, where the second size is less than the first size; the electronic device determines the second page corresponding to the third page; the electronic device generates a fourth page after proportionally zooming out the second page and the second page data based on a zoom-out ratio, where the zoom-out ratio is determined based on the second size and the first size; and the electronic device displays the fourth page on the display.

In a possible design, the display of the electronic device is a foldable display. That the electronic device determines that the size of the display changes from the first size to the second size includes: The electronic device determines that the display changes from an expanded state to a folded state, where a size of the display in the expanded state is the first size, a size of the display in the folded state is the second size, and the third page is a page displayed by the electronic device when the display is in the expanded state.

In a possible design, the zoom-in/out ratio is a ratio of a width of the display to a width in the original rendering size; and/or the zoom-in/out ratio is a ratio of a height of the display to a height in the original rendering size.

In a possible design, that the size of the display of the electronic device does not match the original rendering size includes: the width of the display of the electronic device is greater than the width in the original rendering size; and/or the height of the display of the electronic device is greater than the height in the original rendering size.

For technical effects corresponding to any one of the second aspect or the implementations of the second aspect, refer to technical effects corresponding to any one of the first aspect or the implementations of the first aspect. Details are not described herein again.

According to a third aspect, an embodiment of this application provides an electronic device. The electronic device has a function of implementing the display method according to any one of the first aspect and the possible implementations of the first aspect. The function may be implemented by hardware, or may be implemented by hardware executing corresponding software. The hardware or the software includes one or more modules corresponding to the function.

For technical effects corresponding to any one of the third aspect or the implementations of the third aspect, refer to technical effects corresponding to any one of the first aspect and the implementations of the first aspect. Details are not described herein again.

According to a fourth aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect.

For technical effects corresponding to any one of the fourth aspect or the implementations of the fourth aspect, refer to technical effects corresponding to any one of the first aspect or the implementations of the first aspect. Details are not described herein again.

According to a fifth aspect, an embodiment of this application provides a computer program product. When the computer program product runs on an electronic device, the electronic device is enabled to perform the method according to any one of the first aspect or the implementations of the first aspect.

For technical effects corresponding to any one of the fifth aspect or the implementations of the fifth aspect, refer to technical effects corresponding to any one of the first aspect or the implementations of the first aspect. Details are not described herein again.

According to a sixth aspect, an embodiment of this application provides a circuit system. The circuit system includes a processing circuit, and the processing circuit is configured to perform the method according to any one of the first aspect or the implementations of the first aspect.

For technical effects corresponding to any one of the sixth aspect or the implementations of the sixth aspect, refer to technical effects corresponding to any one of the first aspect or the implementations of the first aspect. Details are not described herein again.

According to a seventh aspect, an embodiment of this application provides a chip system, including at least one processor and at least one interface circuit. The at least one interface circuit is configured to: perform a sending/receiving function, and send instructions to the at least one processor. When the at least one processor executes the instructions, the at least one processor performs the method according to any one of the first aspect or the implementations of the first aspect.

For technical effects corresponding to any one of the seventh aspect or the implementations of the seventh aspect, refer to technical effects corresponding to any one of the first aspect or the implementations of the first aspect. Details are not described herein again.

According to an eighth aspect, an embodiment of this application provides a graphical user interface system on an electronic device. The electronic device includes one or more memories, a display, and one or more processors, the one or more processors are configured to execute one or more computer programs stored in the one or more memories, and the graphical user interface system includes a graphical user interface displayed when the electronic device performs any one of the first aspect or the implementations of the first aspect.

For technical effects corresponding to any one of the eighth aspect and the implementations of the eighth aspect, refer to technical effects corresponding to any one of the first aspect and the implementations of the first aspect. Details are not described herein again.

### BRIEF DESCRIPTION OF DRAWINGS

FIG. 1A is a schematic diagram of an interface of a music app displayed on a mobile phone in the conventional technology;
FIG. 1B is a schematic diagram of an interface of a music app displayed on an automotive central console in the conventional technology;
FIG. 2A-1, FIG. 2A-2, FIG. 2B-1, FIG. 2B-2, FIG. 2C-1, FIG. 2C-2, and FIG. 2D are schematic diagrams of displaying interfaces of an application on a foldable mobile phone by using an existing display method;
FIG. 3A is a schematic diagram of an application scenario according to an embodiment of this application;
FIG. 3B is a schematic diagram of another application scenario according to an embodiment of this application;
FIG. 4 is a schematic diagram of a device type of an electronic device according to an embodiment of this application;
FIG. 5 is a schematic diagram of a hardware structure of an electronic device according to an embodiment of this application;
FIG. 6A is a schematic block diagram of a software structure of an electronic device according to an embodiment of this application;
FIG. 6B is a schematic diagram of an interface according to an embodiment of this application;
FIG. 7 is a schematic flowchart of a display method according to an embodiment of this application;
FIG. 8 is a schematic diagram of a rearrangement rule of different elements according to an embodiment of this application;
FIG. 9A, FIG. 9B, and FIG. 9C are a schematic diagram of another interface according to an embodiment of this application;
FIG. 10 is a schematic flowchart of another display method according to an embodiment of this application;
FIG. 11A, FIG. 11B, and FIG. 11C are a schematic diagram of still another interface according to an embodiment of this application;
FIG. 12 is a schematic flowchart of still another display method according to an embodiment of this application;
FIG. 13A, FIG. 13B, FIG. 13C, and FIG. 13D are a schematic diagram of yet another interface according to an embodiment of this application; and
FIG. 14 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a", "the", "the foregoing", "this", and "the one" of singular forms used in this specification and the appended claims of this application are intended to include an expression like "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In an embodiment of this application, the word such as "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

As forms of electronic device become increasingly diversified, sizes, widths, heights, resolutions, and the like of displays of electronic devices in different forms are not unified. This brings a challenge to an app developer. In an early solution, the developer develops a matching app version for each type of electronic device. However, as forms of electronic device increase, development difficulty increases. Accordingly, another solution appears: Several sets of interface layout styles for different screen specifications are preset in an app, and an interface layout style adapted to an electronic device is selected based on the electronic device running the app. In solution, a quantity of to-be-developed app versions is reduced to some extent, but different user interfaces still need to be designed in advance for different screen specifications. Because styles of the pre-designed user interfaces are limited, the user interfaces cannot adapt to a screen of a new specification, and development difficulty for the developer is high.

With emergence of a mobile phone of a new form, namely, a foldable mobile phone, when the pre-designed user interface is used for displaying on the foldable mobile phone, the following problems may exist.

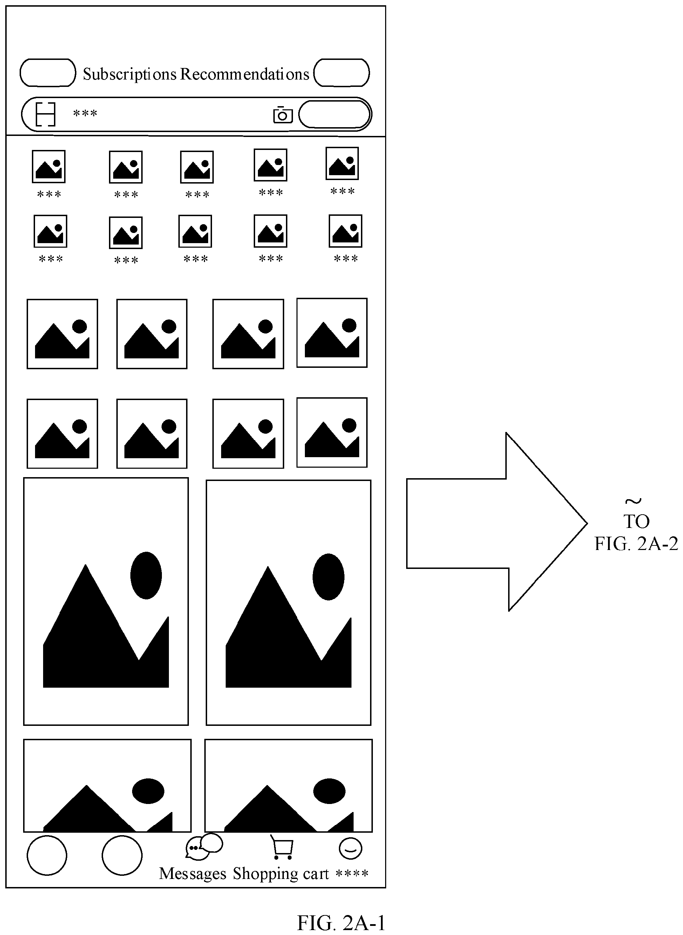

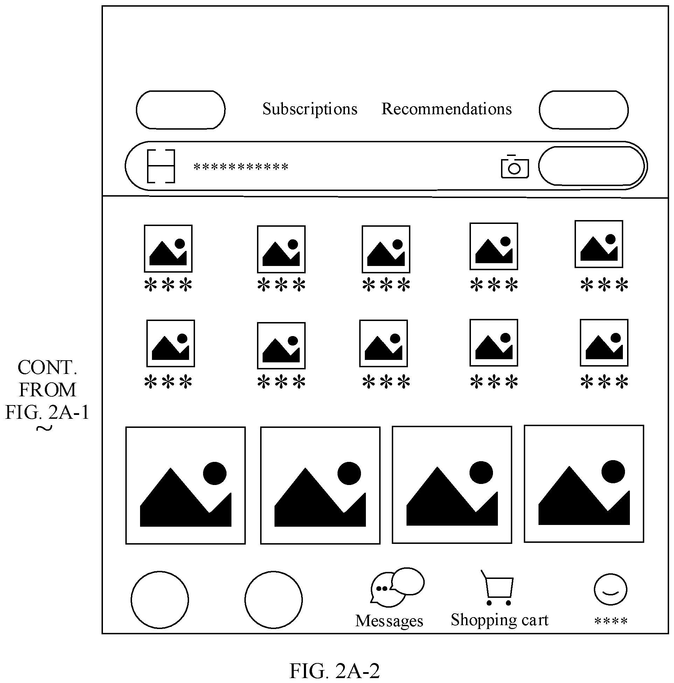

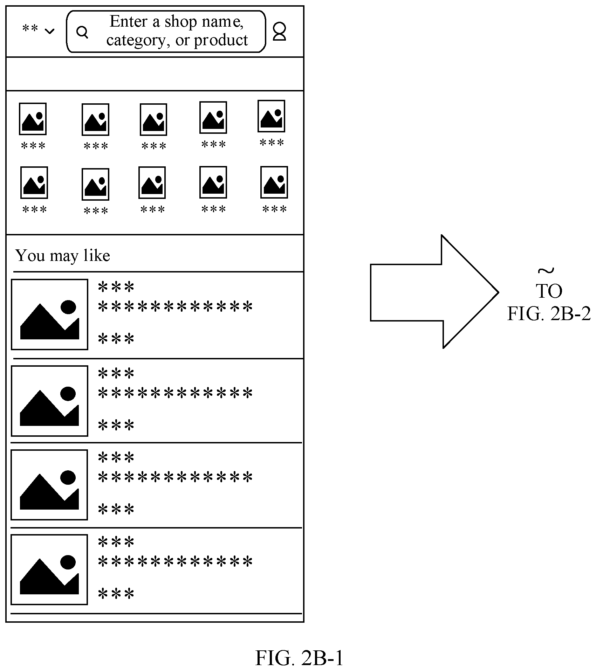

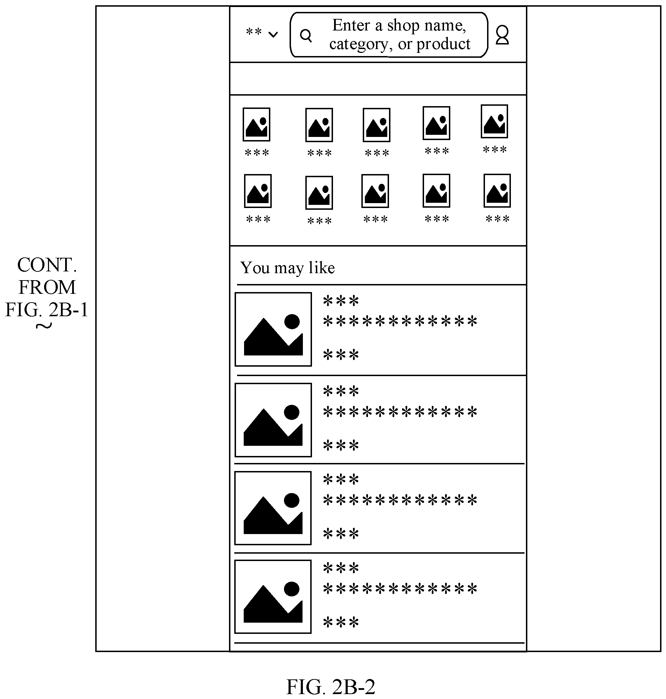

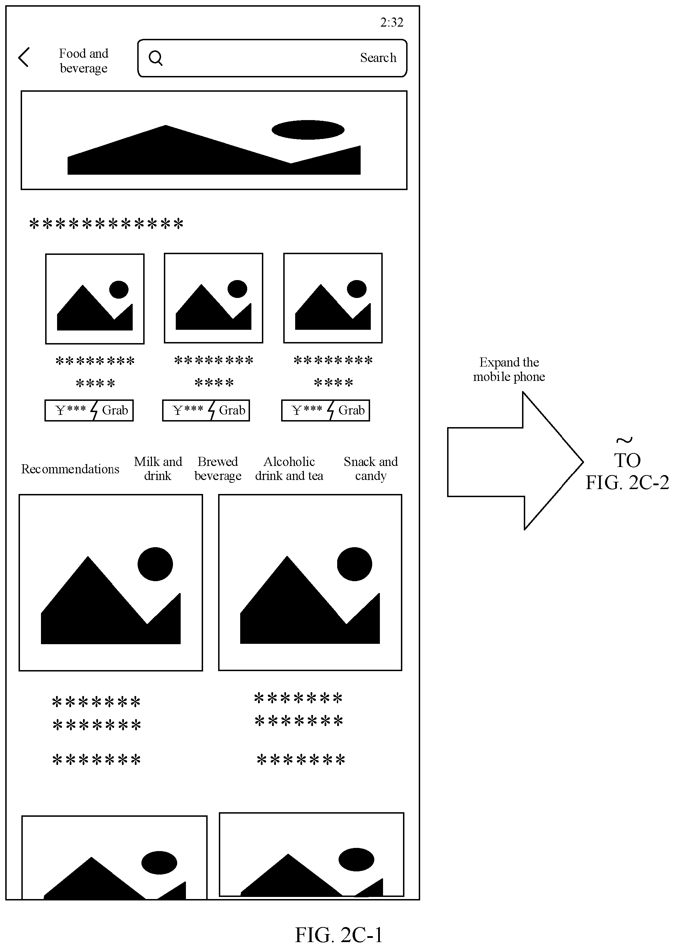

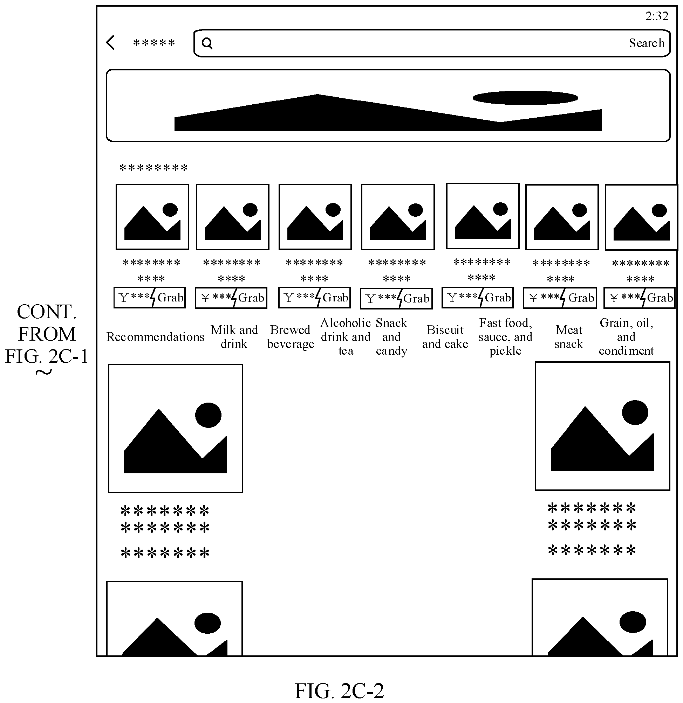

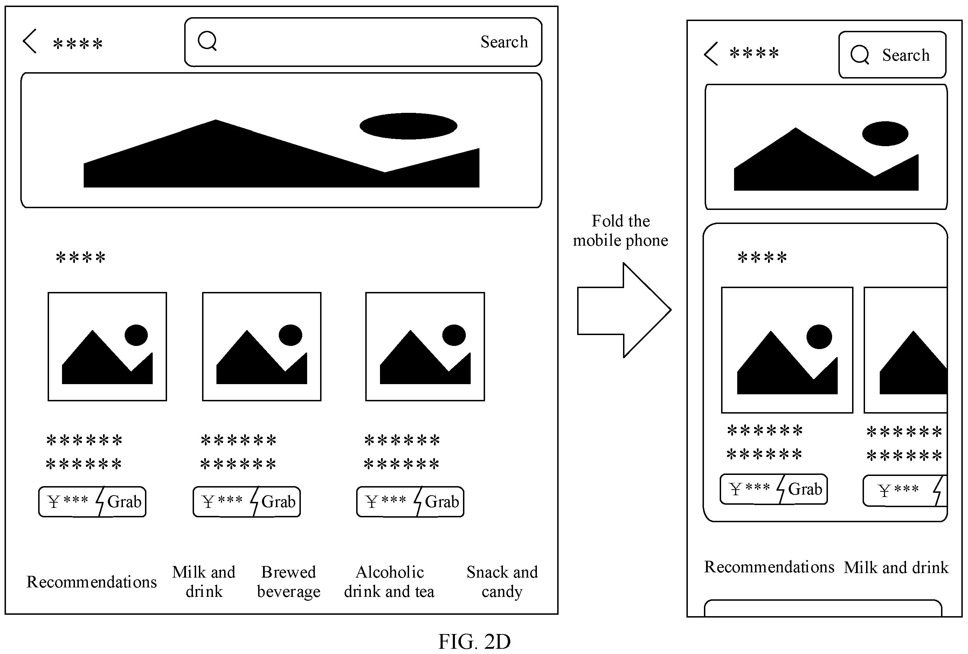

For example, as shown in FIG. 2A-1 and FIG. 2A-2, after the mobile phone is expanded from a folded state, a display interface of the expanded mobile phone is zoomed in overall, but displayed content is reduced. As shown in FIG. 2B-1 and FIG. 2B-2, after the mobile phone is expanded from a folded state, a display interface of the expanded mobile phone is unchanged. However, because an expanded screen is widened, there is blank space at a location that is close to an edge of the screen and that is of the display interface of the expanded mobile phone. As shown in FIG. 2C-1 and FIG. 2C-2, after the mobile phone is expanded from a folded state, a size of an element in a display interface of the expanded mobile phone does not change, but there is blank space in the middle. As shown in FIG. 2D, after the mobile phone is folded from an expanded state, a size of an element in a display interface of the folded mobile phone is unchanged, but only a part of the element can be displayed, and remaining element is covered and cannot be displayed.

A main reason why the foregoing problems occur is that a size of a foldable display of the mobile phone exceeds a range in which the pre-designed interface layout style can be adaptive. A current solution cannot provide a universal display method that is applicable to user interfaces of displays of different screen specifications.

Based on the foregoing problems existing in the current solution, embodiments of this application provide a display method in which one size of original user interface can be adaptively adjusted based on screen specifications of different electronic devices, to be adaptive to electronic devices of different screen specifications, so as to improve user experience. In other words, a developer needs to design only an interface layout style of one size, and does not need to pre-design several sets of interface layout styles for the different screen specifications. This reduces application development difficulty.

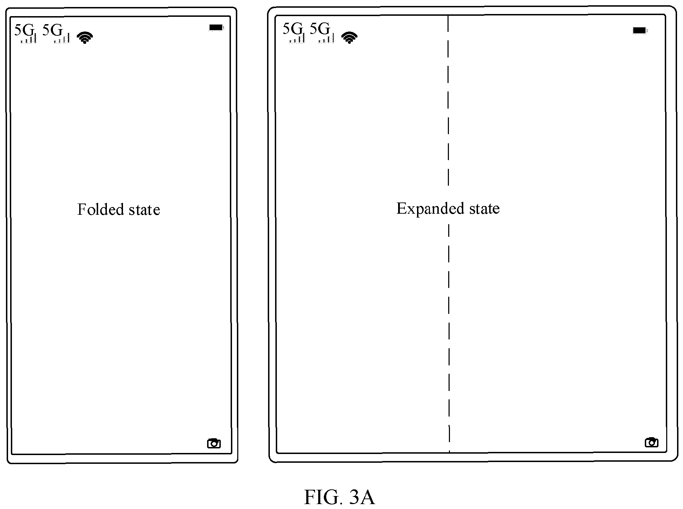

Embodiments of this application may be applied to various application scenarios in which a user interface of an application needs to be displayed on displays of different specifications. Specifically, in some application scenarios, after an application is installed on the electronic device, a display interface of the application may be displayed on displays of different sizes. In an example, as shown in FIG. 3A, an application is deployed on a foldable mobile phone. As shown in FIG. 3A, the mobile phone is in a folded state shown in the left schematic diagram in FIG. 3A. When a user adjusts the mobile phone from a state in the left schematic diagram in FIG. 3A to a state in the right schematic diagram in FIG. 3A, that is, when a foldable display of the mobile phone is expanded, a user interface of the application needs to be displayed on an expanded display, that is, a size of the display used to display the user interface of the application changes.

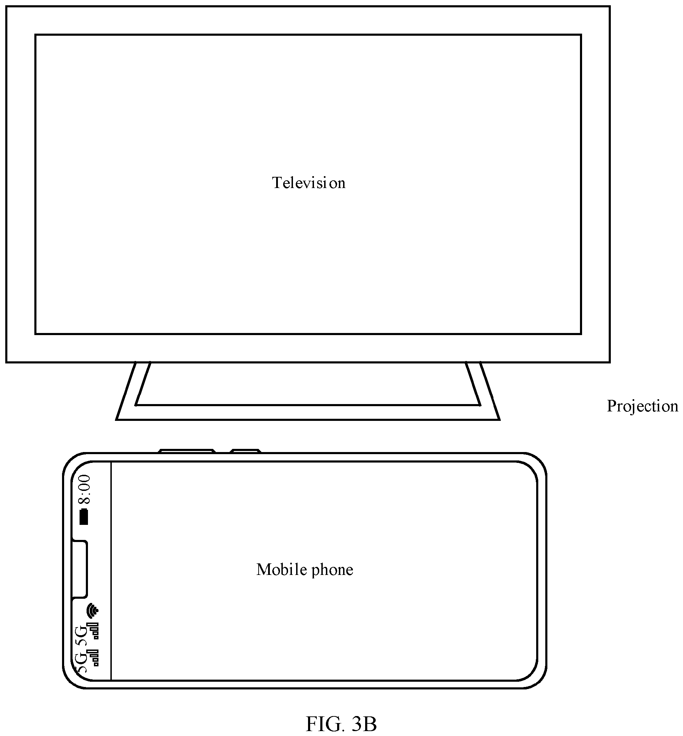

In another example, FIG. 3B is a schematic diagram of an application scenario of the display method according to embodiments of this application. As shown in FIG. 3B, when a user interface of an application is projected from a mobile phone end to a television end, a display interface of the application changes from a display interface of a mobile phone to a display interface of a television, that is, a size of a display used to display the user interface of the application changes.

In some other application scenarios, a same application may be deployed on electronic devices with different screen specifications, and consequently a same application interface of the application also needs to be displayed on displays of different specifications.

First, for ease of understanding, the following first describes related terms and concepts that may be used in embodiments of this application.

### (1) User interface

The user interface means a human-computer interaction interface of an application displayed on a screen of an electronic device. A user interface may be a web (Web)-type user interface or a native user interface. Information about the web-type user interface is sent to the electronic device by a server corresponding to the application, and information about the native user interface is directly generated by the electronic device.

### (2) Element and element data

The element (element) is an object that is drawn on a display and that a user can interact with. For example, the element can be used as a human-computer interaction interface, to receive an operation performed by the user on the electronic device. The element may include a text element (text element), a button (button), an image element (image element), a progress bar (progress bar), and the like.

The element data includes data such as a location, a size, and a color of an element. The electronic device draws an element based on element data, to display an element visible to the user.

### (3) Layout and layout data

The layout (layout) indicates a display effect of an element. In some embodiments, the layout may also be referred to as an element group (ElementGroup), and is used to store layout containers of another element and another element group. The layout includes, for example, a relative layout and an absolute layout. The relative layout indicates a display location of an element relative to another element, and the absolute layout indicates a display location of an element in a display interface. For example, a layout of an element A includes that a central pixel point of the element A coincides with a central point of a display, and a size is 200 pixels (pixels). In this case, the layout of the element A is an absolute layout. A layout of an element B includes that a central pixel point of the element B is located at a location of the N^{th} pixel point to the left of the central pixel point of the element A, and a size of the element B is consistent with that of the element A. In this case, the layout of the element B is a relative layout.

The layout data indicates a layout format and a layout policy, and the layout data includes element data of a plurality of elements and layout information of the element data.

In some embodiments, a user interface (user interface, UI) element displayed by the electronic device includes an element and an element group.

### (4) Process of performing a rendering operation by using a browser kernel

In a case in which a user interface is a web-type user interface, the process of performing a rendering (render) operation by using a browser kernel means a process of generating a visual user interface based on data for describing the user interface. The foregoing data for describing the user interface describes an element in the user interface by using a strictly defined data structure or language, and the data includes a geometric shape, a texture, a location, or other information of the element in the user interface. As an example, when a user interface is a web-type user interface, data for describing the user interface may specifically include a hypertext markup language (hypertext markup language, HTML) file, a cascading style sheet (cascading style sheet, CSS) style, and the like. Content specifically included in the "data for describing the user interface" is not exhaustive herein.

A rendering (render) process of the user interface may include determining a style (style) of the element of the user interface, determining a layout (layout) of the element of the user interface, compositing updating (compositing update), pre-painting (prepaint), painting (paint), or another step. Details are not listed herein one by one.

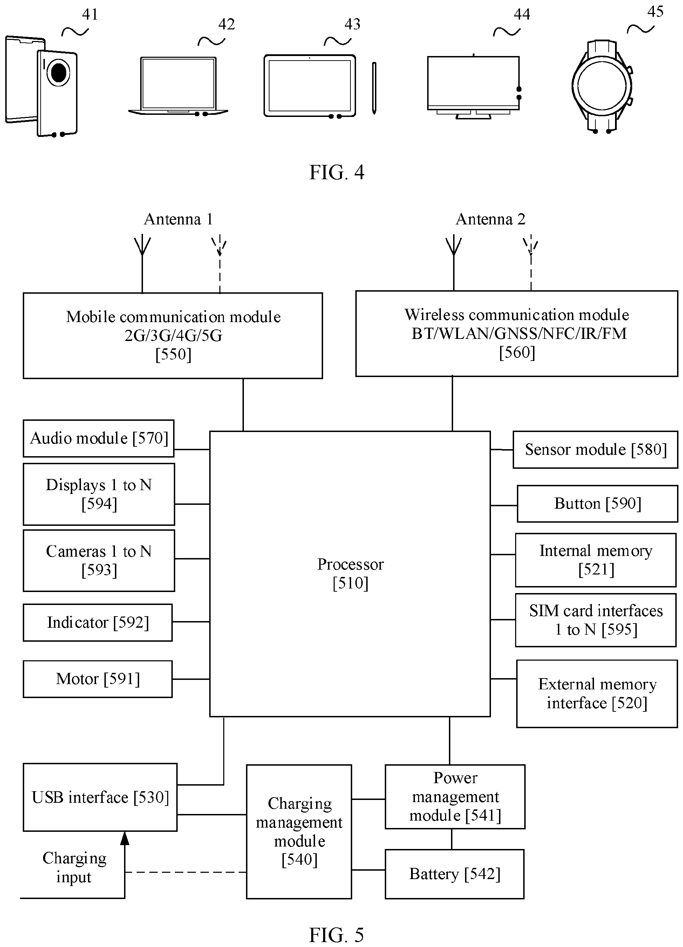

The display method provided in this embodiment of this application may be applied to the electronic device. For example, as shown in FIG. 4, the electronic device may be specifically an electronic device with a display function, such as a mobile phone 41, a notebook computer 42, a tablet computer 43, a large-screen display device 44, a wearable device (like a smartwatch or a smart band) 45, a vehicle-mounted device, an ultra-mobile personal computer (ultra-mobile personal computer, UMPC), a netbook, a personal digital assistant (personal digital assistant, PDA), or an artificial intelligence (artificial intelligence) device. An operating system installed on the electronic device includes but is not limited to an iOS^{®}, Android^{®} (Android), Harmony^{®} (Harmony), Windows^{®}, Linux^{®} operating system, or another operating system. In some embodiments, the electronic device may be a fixed device, or may be a portable device. A specific type of the electronic device and an operating system installed on the electronic device are not limited in this application.

For example, FIG. 5 is a schematic diagram of a structure of an electronic device 500.

The electronic device 500 may include a processor 510, an external memory interface 520, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a sensor module 580, a button 590, a motor 591, an indicator 592, a camera 593, a display 594, a subscriber identity module (subscriber identity module, SIM) card interface 595, and the like.

It may be understood that the structure shown in this embodiment of this application does not constitute a specific limitation on the electronic device 500. In some other embodiments of this application, the electronic device 500 may include more or fewer components than those shown in the figure, or a combination of a part of the components, or splits from a part of the components, or an arrangement of different components. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 510, and is configured to store instructions and data. In some embodiments, the memory in the processor 510 is a cache. The memory may store instructions or data just used or cyclically used by the processor 510. If the processor 510 needs to use the instructions or the data again, the processor may directly invoke the instructions or the data from the memory. This avoids repeated access, reduces waiting time of the processor 510, and improves system efficiency.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus that includes a serial data line (serial data line, SDA) and a serial clock line (serial clock line, SCL). In some embodiments, the processor 510 may include a plurality of groups of I2C buses. The processor 510 may be separately coupled to the touch sensor, a charger, a flash, the camera 593, and the like through different I2C bus interfaces. For example, the processor 510 may be coupled to the touch sensor through the I2C interface, so that the processor 510 communicates with the touch sensor through the I2C bus interface, to implement a touch function of the electronic device 500.

The MIPI interface may be configured to connect the processor 510 and a peripheral component like the display 594 or the camera 593. The MIPI interface includes a camera serial interface (camera serial interface, CSI), a display serial interface (display serial interface, DSI), and the like. In some embodiments, the processor 510 communicates with the camera 593 through the CSI interface, to implement a photographing function of the electronic device 500. The processor 510 communicates with the display 594 through the DSI interface, to implement a display function of the electronic device 500.

The USB interface 530 is an interface that conforms to a USB standard specification, and may be specifically a mini USB interface, a micro USB interface, a USB type-C interface, or the like. The USB interface 530 may be configured to connect to the charger to charge the electronic device 500, or may be configured to perform data transmission between the electronic device 500 and a peripheral device, or may be configured to connect to a headset for playing audio through the headset. The interface may be further configured to connect to another electronic device like an AR device.

It may be understood that an interface connection relationship between the modules shown in this embodiment of this application is merely an example for description, and constitutes no limitation on the structure of the electronic device 500. In some other embodiments of this application, the electronic device 500 may alternatively use an interface connection manner different from that in the foregoing embodiment, or use a combination of a plurality of interface connection manners.

The charging management module 540 is configured to receive a charging input from the charger. The charger may be a wireless charger or a wired charger. In some embodiments of wired charging, the charging management module 540 may receive a charging input of a wired charger through the USB interface 530. In some embodiments of wireless charging, the charging management module 540 may receive a wireless charging input through a wireless charging coil of the electronic device 500. The charging management module 540 supplies power to the electronic device by using the power management module 541 while charging the battery 542.

The power management module 541 is configured to connect the battery 542, the charging management module 540, and the processor 510. The power management module 541 receives an input from the battery 542 and/or the charging management module 540, and supplies power to the processor 510, the internal memory 521, the display 594, the camera 593, the wireless communication module 560, and the like. The power management module 541 may be further configured to monitor parameters such as a battery capacity, a battery cycle count, and a battery health status (electric leakage or impedance). In some other embodiments, the power management module 541 may alternatively be disposed in the processor 510. In some other embodiments, the power management module 541 and the charging management module 540 may alternatively be disposed in a same device.

A wireless communication function of the electronic device 500 may be implemented through the antenna 1, the antenna 2, the mobile communication module 550, the wireless communication module 560, the modem processor, the baseband processor, and the like.

The antenna 1 and the antenna 2 are configured to transmit and receive an electromagnetic wave signal. Each antenna in the electronic device 500 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 550 may provide a wireless communication solution that includes 2G/3G/4G/5G or the like and that is applied to the electronic device 500. The mobile communication module 550 may include at least one filter, a switch, a power amplifier, a low noise amplifier (low noise amplifier, LNA), and the like. The mobile communication module 550 may receive an electromagnetic wave through the antenna 1, perform processing such as filtering or amplification on the received electromagnetic wave, and transmit a processed electromagnetic wave to the modem processor for demodulation. The mobile communication module 550 may further amplify a signal modulated by the modem processor, and convert an amplified signal into an electromagnetic wave for radiation through the antenna 1. In some embodiments, at least some functional modules of the mobile communication module 550 may be disposed in the processor 510. In some embodiments, at least some functional modules of the mobile communication module 550 may be disposed in a same device as at least some modules of the processor 510.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device, or displays an image or a video on the display 594. In some embodiments, the modem processor may be an independent component. In some other embodiments, the modem processor may be independent of the processor 510, and is disposed in a same device as the mobile communication module 550 or another functional module.

The wireless communication module 560 may provide a wireless communication solution that is applied to the electronic device 500, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 560 may be one or more components integrating at least one communication processor module. The wireless communication module 560 receives an electromagnetic wave through the antenna 2, performs frequency modulation and filtering processing on the electromagnetic wave signal, and sends a processed signal to the processor 510. The wireless communication module 560 may further receive a to-be-sent signal from the processor 510, perform frequency modulation and amplification on the signal, and convert a processed signal into an electromagnetic wave for radiation through the antenna 2.

In some embodiments, in the electronic device 500, the antenna 1 and the mobile communication module 550 are coupled, and the antenna 2 and the wireless communication module 560 are coupled, so that the electronic device 500 can communicate with a network and another device by using a wireless communication technology.

The electronic device 500 may implement a display function through the GPU, the display 594, the application processor, and the like. The GPU is a microprocessor for image processing, and is connected to the display 594 and the application processor. The GPU is configured to: perform mathematical and geometric computation, and render an image. The processor 510 may include one or more GPUs, which execute program instructions to generate or change display information.

The display 594 is configured to display an image, a video, or the like. The display 594 includes a display panel. In some embodiments, the electronic device 500 may include one or N displays 594, where N is a positive integer greater than 1. A shape of the display 594 may be a regular shape or an irregular shape. A quantity, the shape, and a size of the display 594 are not specifically limited in embodiments of this application.

The camera 593 is configured to capture a static image or a video. An optical image of an object is generated through the lens, and is projected onto a photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 500 may include one or N cameras 593, where N is a positive integer greater than 1.

The external memory interface 520 may be configured to connect to an external memory card, for example, a micro SD card, to extend a storage capability of the electronic device 500. The external memory card communicates with the processor 510 through the external memory interface 520, to implement a data storage function. For example, files such as music and videos are stored in the external memory card.

The internal memory 521 may be configured to store computer-executable program code. The executable program code includes instructions. The internal memory 521 may include a program storage area and a data storage area. The program storage area may store an operating system, an application required by at least one function (for example, a voice playing function or an image playing function), and the like. The data storage area may store data (such as audio data and an address book) created during use of the electronic device 500, and the like. In addition, the internal memory 521 may include a high-speed random access memory, or may include a nonvolatile memory, for example, at least one magnetic disk storage device, a flash memory device, or a universal flash storage (universal flash storage, UFS). The processor 510 runs the instructions stored in the internal memory 521 and/or instructions stored in the memory disposed in the processor, to perform various function applications and data processing of the electronic device 500.

The audio module 570 is configured to convert digital audio information into an analog audio signal for output, and is also configured to convert an analog audio input into a digital audio signal. The audio module 570 may be further configured to encode and decode an audio signal. In some embodiments, the audio module 570 may be disposed in the processor 510, or some functional modules in the audio module 570 are disposed in the processor 510. The electronic device 500 may perform, for example, music playback or recording by using the audio module 570. The audio module 570 may include a speaker, a receiver, a microphone, a headset jack, an application processor, and the like, to implement an audio function.

The sensor module 580 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

In some embodiments, after detecting an operation of tapping an application icon on the display 594, the electronic device 500 determines that an interface of the application needs to be displayed, and obtains corresponding original element data, corresponding original layout data, and a corresponding original rendering size. A first page is generated after rendering is performed based on the obtained data. Then, a zoom-in/out ratio is determined based on the size of the display and the original rendering size, and a size of the first page and a size of an element in the first page are proportionally zoomed in/out based on the zoom-in/out ratio, to obtain a second page. Then, second page data included in the second page is rearranged according to a preset page rearrangement rule, to obtain final third page data, and an interface of the application is generated and displayed based on the third page data.

The button 590 includes a power button, a volume button, and the like. The button 590 may be a mechanical button, or may be a touch button. The electronic device 500 may receive a button input, and generate a button signal input related to a user setting and function control of the electronic device 500.

The motor 591 may generate a vibration prompt. The motor 591 may be configured to provide an incoming call vibration prompt and a touch vibration feedback. For example, touch operations performed on different applications (for example, photographing and audio playing) may correspond to different vibration feedback effects. The motor 591 may also correspond to different vibration feedback effects for touch operations performed on different areas of the display 594. Different application scenarios (for example, a time reminder, information receiving, an alarm clock, and a game) may also correspond to different vibration feedback effects. A touch vibration feedback effect may be further customized.

The indicator 592 may be an indicator light, and may be configured to indicate a charging status and a power change, or may be configured to indicate a message, a missed call, a notification, and the like.

The SIM card interface 595 is configured to connect to a SIM card. The SIM card may be inserted into the SIM card interface 595 or removed from the SIM card interface 595, to implement contact with or separation from the electronic device 500. The electronic device 500 may support one or N SIM card interfaces, where N is a positive integer greater than 1.

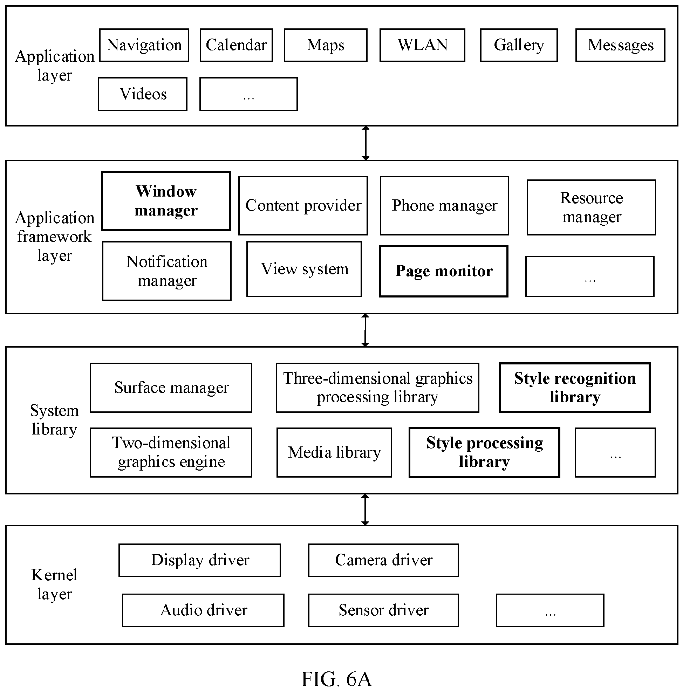

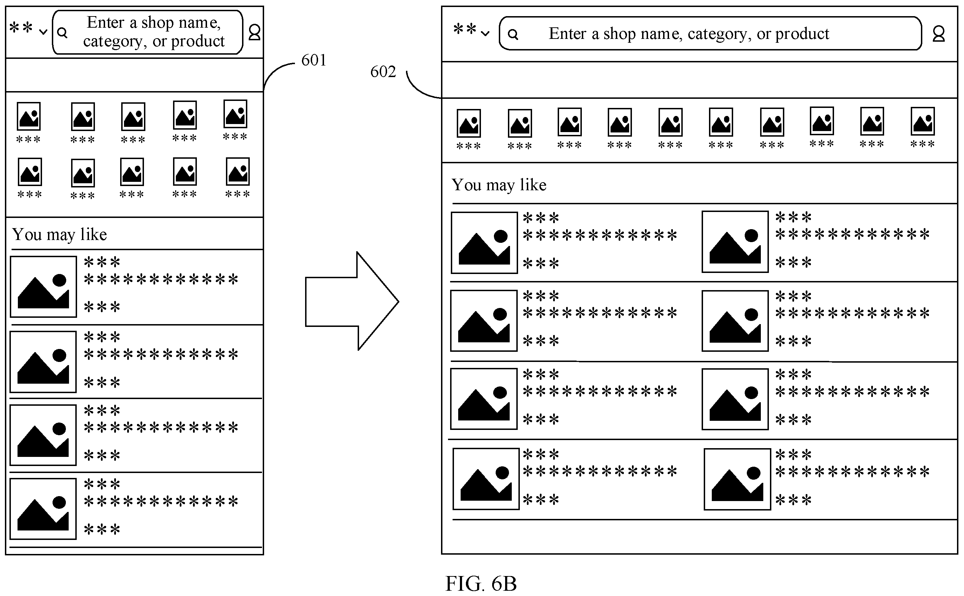

FIG. 6Ais a block diagram of a software structure of an electronic device 500 according to an embodiment of this application.

A software system of the electronic device 500 may use a layered architecture, an event-driven architecture, a microkernel architecture, a micro service architecture, or a cloud architecture. In this embodiment of this application, the layered architecture is used as an example to describe a software structure of the electronic device 500. A layered system structure is applicable to an Android^{®} (Android) system, a Harmony^{®} (Harmony) system, and the like.

In a layered architecture, software is divided into several layers, and each layer has a clear role and task. The layers communicate with each other through a software interface. In some embodiments, a layered system architecture is classified into four layers that are respectively an application layer, an application framework layer, a system layer, and a kernel layer from top to bottom.

The application layer may include a series of application packages.

As shown in FIG. 6A, the application packages may include applications such as Camera, Gallery, Calendar, Phone, Maps, Navigation, WLAN, Bluetooth, Music, Videos, and Messages.

In some embodiments, an application package corresponding to an application installed on the electronic device 500 includes original data of the application. The original data includes, for example, original element data, original layout data, and an original display size. The original display size may include data such as a height and a width of an original display. The original data is data that corresponds to the original display size and that is adapted by a developer for the application in an application development process. For example, if the developer develops the Gallery application based on a mobile phone, the original data includes element data and layout data of Gallery corresponding to the mobile phone, and a display size of the mobile phone.

For example, if a system installed on the electronic device is the Android system, the original data is configured in an Android application package (Android application package, APK) of each application on the electronic device. If the system installed on the electronic device is the Harmony system, the original data is configured in a HarmonyOS capability package (HarmonyOS Ability Package, HAP) of each application on the electronic device.

The application framework layer provides an application programming interface (application programming interface, API) and a programming framework for an application at the application layer. The application framework layer includes some predefined functions.

As shown in FIG. 6A, the application framework layer may include a window manager, a content provider, a view system, a phone manager, a resource manager, a notification manager, and the like.

The window manager is configured to manage a window program. The window manager may obtain the size of the display, determine whether there is a status bar, perform screen locking, take a screenshot, and the like.

In this embodiment of this application, the window manager may be further configured to determine a zoom-in/out ratio when the display size does not match original rendering size, where the zoom-in/out ratio is a ratio of the display size to the original rendering size. The original rendering size may be the original display size included in the original data of the application, or may be a preset value obtained after the original display size is modified. That the display size does not match the original rendering size may be understood as that the display size is inconsistent with the original rendering size.

In this embodiment of this application, the application framework layer further includes a page monitor. The page monitor may monitor in real time whether page content or a page style changes. If the page content or style changes, for example, the original page content or style is designed in a specific size, and then the size of the display changes, the page content and size need to change accordingly. In this case, content or style rearrangement is triggered.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messages may include a view for displaying a text and a view for displaying an image.

The phone manager is configured to provide a communication function for the electronic device 500, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message, which may automatically disappear after a short pause without requiring a user interaction. For example, the notification manager is configured to: notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert sound is played, the electronic device vibrates, or the indicator light blinks.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In this embodiment of this application, the system library further includes a style recognition library and a style processing library. The style recognition library stores features of different types of elements, and may recognize different elements in a page based on the features of the different types of elements, for example, a list, a large image, a single row, and a banner. The style processing library stores rearrangement rules applicable to the elements of different types during rearrangement. After the page monitor triggers content or style rearrangement, the elements of different types may be rearranged according to corresponding rearrangement rules.

The kernel layer is a layer between hardware and software. The kernel layer includes at least a display driver, a camera driver, an audio driver, and a sensor driver.

In this embodiment of this application, when an application at the application layer needs to display an interface, a display driver obtains an application package corresponding to the application, to obtain original data of the application (the original data includes original pixel data, original layout data, and an original display size). Then, based on the obtained original pixel data, original layout data, and original rendering size (an original display size or a preset value obtained after the original display size is modified), rendering is performed to obtain the first page. The window manager determines whether the display size matches the original rendering size, and determines the zoom-in/out ratio if the display size does not match the original rendering size, where the zoom-in/out ratio is a ratio of the display size to the original rendering size. Then, the display driver proportionally zooms in/out, based on the zoom-in/out ratio, the size of the first page and elements included in the first page, to obtain the second page. The page monitor triggers content or style rearrangement. Finally, the style recognition library recognizes different elements in the second page based on features of elements of different types, for example, a list, a large image, a single row, and a banner. The style processing library rearranges elements of different types according to corresponding rearrangement rules, to obtain the third page, and the display driver displays the third page.

For example, as shown in FIG. 6B, the electronic device is a foldable mobile phone. When the foldable mobile phone is in a folded state, that is, when a display of the foldable mobile phone is a narrow screen, a display interface of the foldable mobile phone is 601. After the foldable mobile phone is expanded, that is, when the narrow screen of the display changes to a wide screen, after the method in this embodiment of this application is used, the display interface of the foldable mobile phone is 602. It can be seen that elements in the interface 602 are arranged more closely, and problems in the interfaces shown in FIG. 2A-1, FIG. 2A-2, FIG. 2B-1, FIG. 2B-2, FIG. 2C-1, FIG. 2C-2, and FIG. 2D do not occur.

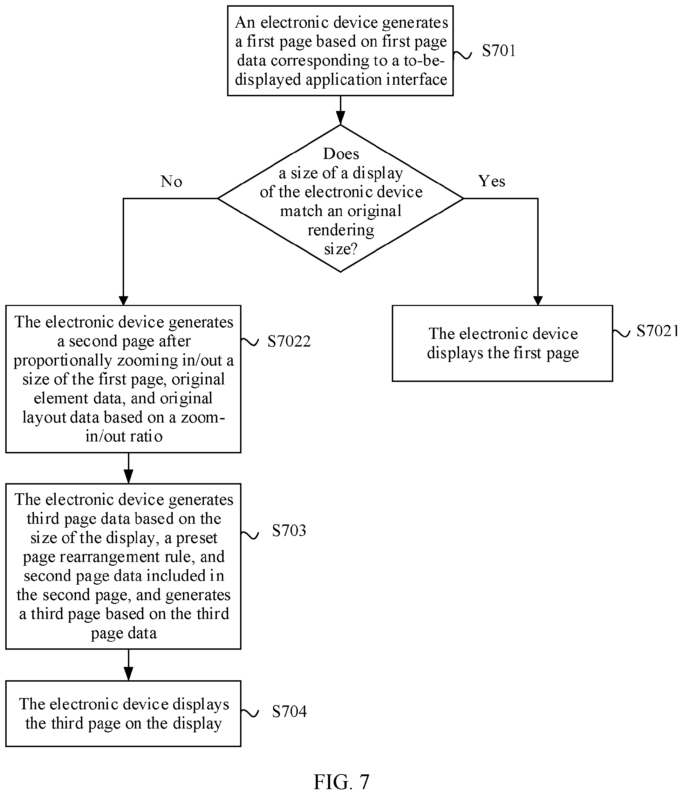

FIG. 7 is a schematic flowchart of a display method according to an embodiment of this application. The method can be applied to an electronic device. As shown in FIG. 7, the method may include S701 to S704.

S701: An electronic device generates a first page based on first page data corresponding to a to-be-displayed application interface.

The first page data includes original element data, original layout data, and an original rendering size.

In some embodiments, when the electronic device needs to display an application interface, the electronic device needs to obtain original data corresponding to the application interface. The original data includes original element data, original layout data, and an original display size. In an application development process, a developer may design an application interface adapted to a specific electronic device. The electronic device is an original device, a display size of the original device is the original display size, and element data and layout data that are of the application and adapted to the original display size are the original element data and the original layout data.

The original display size is a display size used by the developer in the application development process. For example, the original element data and the original layout data that correspond to the application interface are designed based on the original display size. Optionally, the original display size is a default size preconfigured in a development tool, and different types of electronic devices (such as a mobile phone, a smartwatch, and a tablet) correspond to a same preconfigured default size or different preconfigured default sizes. For example, in the development tool, a default size corresponding to the smartwatch is preconfigured as (466 x 466) pixels, and a default size corresponding to the mobile phone is preconfigured as (2340 x 1080) pixels. In this case, when the developer develops a smartwatch application by using the development tool, an original display size correspondingly used is (466 x 466) pixels; and when the developer develops a mobile phone application by using the development tool, an original display size correspondingly used is (2340 x 1080) pixels. Alternatively, the original display size is a size freely configured by the developer. For example, the developer directly presets the original display size to (466 x 466) pixels, and then designs an application interface based on a size of the (466 x 466) pixels.

It should be noted that, for related content of the development tool, refer to the conventional technology. This is not limited in embodiments of this application. In addition, a default size preconfigured in the development tool corresponds to an electronic device type, and preconfigured default sizes corresponding to electronic devices of a same type but different models are the same. For example, if a default size corresponding to a preconfigured mobile phone is (2340 x 1080) pixels, when the developer develops mobile phones of different brands and models, original display sizes obtained by using the development tool are all (2340 x 1080) pixels. This is not described in the following.

In some embodiments, a value of the original rendering size in this embodiment of this application is the original display size. For example, if the original display size is (375 x 1080) pixels, in this embodiment of this application, the original display size is directly used as the original rendering size for rendering.

In some other embodiments, it is considered that the original display size based on which the developer develops an application is not a size commonly used in the industry, and is applicable to only an electronic device of a specific model. If rendering is performed based on the original display size, adjustment needs to be performed each time when the original display size is applicable to screens of different sizes. Therefore, in this embodiment of this application, the value of the original rendering size is set to a preset value. The preset value is generally the size commonly used in the industry. In other words, in this embodiment of this application, the original rendering size in this embodiment of this application may be obtained after the original display size is changed to the preset value. Optionally, the process may be specifically implemented as follows: parsing preset code in a process of rendering the first page, to obtain the preset value; and setting the value of the original rendering size to the preset value. In a possible implementation, the preset value can be obtained by setting a width of the original display size to a specific value (for example, 375 pixels) and changing a height of the original display size proportionally. The ratio is a ratio of the specific value to the width of the original display size. For example, if the original display size is (2340 x 1080) pixels, the preset value is (375 x 1731) pixels. If the original display size is (466 x 466) pixels, the preset value is (375 x 375) pixels. For another example, the preset value is only a value of a modified width, and the value is the preset value, for example, 375 pixels, which indicates that the width of the original display size is set to the preset value, and the height of the original display size is proportionally changed. In another possible implementation, the preset value can be obtained by setting the height of the original display size to a specific value (for example, 375 pixels) and changing the width of the original display size proportionally. For example, if the original display size is (2340 x 1080) pixels, the preset value is (813 x 375) pixels. If the original display size is (466 x 466) pixels, the preset value is (375 x 375) pixels. For another example, the preset value is only a value of a modified height, and the value is the preset value, for example, 375 pixels, which indicates that the height of the original display size is set to the preset value, and the width of the original display size is proportionally changed.

For example, the to-be-displayed application interface is a web-type interface, and the first page data corresponding to the web-type interface is described by using data such as a hypertext markup language (hypertext markup language, HTML) file, a cascading style sheet (cascading style sheet, CSS) style, and scripting language (JavaScript) code. In a rendering process, the electronic device reads the data that describes the web-type interface. When the JavaScript code is read, the JavaScript code is parsed to obtain the preset value, and then a value of a rendering size in the CSS style is modified to the preset value based on the preset value. Then, in the rendering process, the original element data and the original layout data may be zoomed in/out proportionally based on a ratio of the preset value to the original rendering size, to obtain new element data and layout data, and then rendering is performed to obtain the first page.

In some embodiments, the to-be-displayed application interface is a web-type user interface. When the electronic device needs to display the application interface, the electronic device may send request information to a server. In response to the received request information, the server sends, to the electronic device, a data packet corresponding to the application interface.

In some other embodiments, the to-be-displayed application interface is a native user interface. When the electronic device needs to display the application interface, the electronic device may directly generate a data packet corresponding to the to-be-displayed application interface.

In some embodiments, after detecting an operation of tapping an application icon by a user, the electronic device starts the application and triggers drawing of an application interface, that is, starts to perform S701. Optionally, the operation for triggering drawing of the application interface may further include another touch operation, a voice operation, a UI event, and the like. For example, after detecting an operation of starting an application by using a voice of the user, the electronic device triggers drawing of the application interface, and obtains the first page data. For another example, when a foreground application of the electronic device automatically switches a picture, the UI event is triggered, and the first page data is obtained, to draw an application interface obtained after picture switching. The foreground application is an application corresponding to an interface currently displayed on the display of the electronic device. In other words, an application of which interface is currently displayed on the display of the electronic device is a foreground application.

If the size of the display of the electronic device matches the original rendering size, the electronic device may directly display the first page, that is, perform the following S7021.

If the size of the display of the electronic device does not match the original rendering size, the electronic device needs to adjust the first page, that is, perform the following S7022, S703, and S704.

The matching means that the size of the display of the electronic device is consistent with the original rendering size. For example, both the size of the display of the electronic device and the original rendering size are (375 x 1080) pixels. Alternatively, if in a process in which the electronic device performs rendering mainly based on an attribute value (for example, a width value), to generate the first page, and there is no specific requirement for another attribute value (for example, a height value), the matching means that a value of the size of the display of the electronic device in the attribute (for example, the width) is consistent with a value of the original rendering size in the attribute (for example, the width). Correspondingly, that the size of the display of the electronic device does not match the original rendering size means that the size of the display of the electronic device is inconsistent with the original rendering size. For example, the size of the display of the electronic device is (2340 x 1080) pixels, and the original rendering size is (375 x 1080) pixels. Alternatively, the original rendering size is a width of an original page, and that the size of the display of the electronic device does not match the original rendering size includes: A width of the display of the electronic device is greater than the width of the original page. Alternatively, the original rendering size is a height of an original page, and that the size of the display of the electronic device does not match the original rendering size includes: A height of the display of the electronic device is greater than the height of the original page.

S7021: The electronic device displays the first page.

S7022: The electronic device generates a second page after proportionally zooming in/out a size of the first page, the original element data, and the original layout data based on the zoom-in/out ratio.

The zoom-in/out ratio is determined based on the size of the display and the original rendering size.

In some embodiments, the zoom-in/out ratio is a ratio of the width of the display to the width in the original rendering size; and/or the zoom-in/out ratio is a ratio of the height of the display to the height in the original rendering size.

The zoom-in/out ratio includes a zoom-in ratio and a zoom-out ratio. For example, if the width of the original rendering size is less than the width of the display of the electronic device, zoom-in processing needs to be performed on the first page data, to obtain new page data adapted to a large display size. In this case, it is determined that a corresponding zoom-in/out ratio should be the zoom-in ratio. For another example, if the width of the original rendering size is greater than the width of the display of the electronic device, zoom-out processing needs to be performed on the first page data, to obtain new page data adapted to a small display size. In this case, it is determined that a corresponding zoom-in/out ratio should be the zoom-out ratio.

After the zoom-in/out ratio is determined, the proportionally zooming in/out a size of the first page, the original element data, and the original layout data based on the zoom-in/out ratio includes: if the determined zoom-in/out ratio is the zoom-in ratio, proportionally zooming in the first page based on the zoom-in ratio, and proportionally zooming in the element data and the original layout data that are in the first page. For example, if the zoom-in/out ratio is zooming in by a factor of two times, and the first page is (375 x 1080) pixels, after the first page is proportionally zoomed in by a factor of two times, the second page of (750 x 2160) pixels may be obtained, a size of each element in the second page is twice a size of a corresponding element in the first page, and a row spacing between elements is also zoomed in by a factor of two times. Similarly, if the determined zoom-in/out ratio is the zoom-out ratio, the first page is zoomed out proportionally based on the zoom-out ratio, and a size of an element in the first page is also zoomed out proportionally. For example, if the zoom-in/out ratio is zooming out by a factor of two times, and the first page is (750 x 2160) pixels, after the first page is proportionally zoomed out by a factor of two times, the second page of (375 x 1080) pixels may be obtained, a size of each element in the second page is half a size of a corresponding element in the first page, and a row spacing between elements is also zoomed out by a factor of two times.

S703: The electronic device generates third page data based on the size of the display, a preset page rearrangement rule, and second page data included in the second page, and generates a third page based on the third page data.

The third page data is new element data and layout data that are obtained after the element data and the layout data in the second page are adjusted and rearranged based on the size of the display and according to the preset page rearrangement rule.

Optionally, the preset rearrangement rule defines a size change rule and a layout change rule, and the size change rule includes size change rules of different types of elements in the second page data existing when a layout manner indicated by the layout data in the second page changes to a layout manner indicated by the third page data. In this case, the electronic device needs to identify different types of elements in the second page, and determine a changed size of each element in the second page according to the size change rule. Size change ratios of different elements may be different.

For example, the elements in the second page include a list (List) element, a large image element, a rectangle element that is absolutely positioned and arranged out of order, a waterfall element, or another element. The second page may further include an element whose size does not need to be updated, for example, a head floating box element, a bottom floating box element, or another element. Details are not exhaustive herein.

Further, for the size change rules of different types of elements, as an example, a size change rule for the list element may include: zooming out a width edge and a height edge of each list element to 1/n of that of the original height edge of each list element. Further, for a plurality of list elements in a single row, a final structure of the plurality of list elements is still in a single row, and spacings between different list elements are equal in width; and for a list element in a plurality of rows, a capacity of the list element in each row is n times of the original capacity of the list element in each row, and spacings are equal in width.

Optionally, the electronic device may further compare a height of the list element with a height of a parent node of the list element. If a ratio of the height of the parent node of the list element to the height of the list element exceeds m, the electronic device may re-adjust the height of the parent node of the list element.

A size change rule for the large image element may include: keeping the width of the large image element unchanged, and adjusting the height of the large image element to 1/s of the original height of the large image element; or adjusting both the height and the width of the large image element to 1/s of the original height and width of the large image element, and filling left and right sides of the large image element with an original image with a blur effect or a pure color image.

A size change rule for a rectangle element that is absolutely positioned and arranged out of order may include: considering a plurality of rectangle elements that are absolutely positioned and arranged out of order as one large image element. For a specific processing manner, refer to the descriptions of a processing manner of the large image element, and details are not described herein again.

A change rule for the waterfall element may include: zooming out a wide side of each waterfall element based on a preset ratio, and increasing a quantity of columns of waterfalls deployed on a wide side of a current display area.

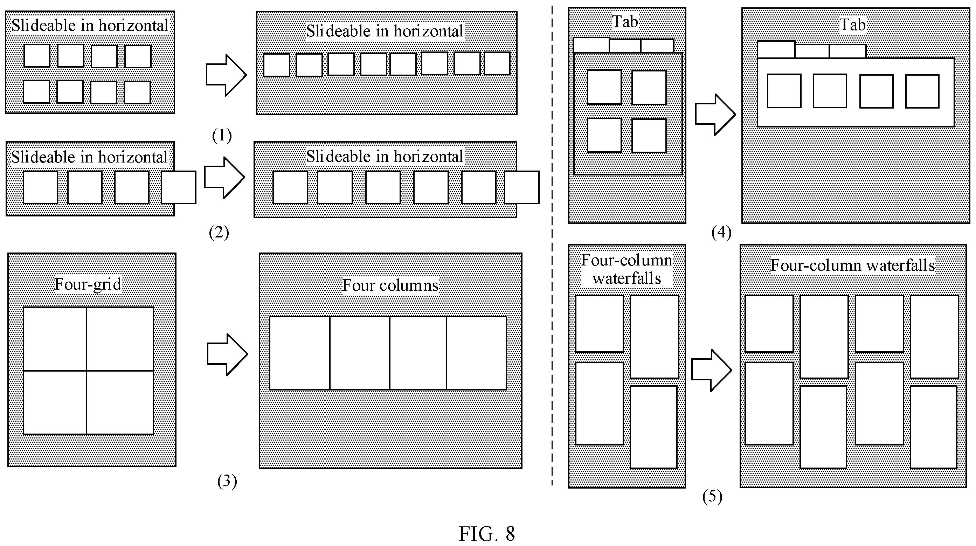

FIG. 8 is a possible schematic diagram of a rearrangement rule used when different elements are rearranged according to an embodiment of this application. For example, as shown in (1) in FIG. 8, when elements are displayed on a narrow screen as two-row and four-column elements (as shown in the left figure in (1)) that can be horizontally slid, and the elements may be displayed on a wide screen as one-row and eight-column elements that can be horizontally slid. Sizes, locations, spacings between different elements, and the like of these elements may be obtained based on the size of the display. Similarly, as shown in (2) in FIG. 8, when elements are displayed on a narrow screen as one-row and four-column elements (as shown in the left figure in (2)) that can be horizontally slid, and the elements may be displayed on a wide screen as one-row and six-column elements that can be horizontally slid. Sizes, locations, spacings between different elements, and the like of these elements may be obtained based on the size of the display. As shown in (3) in FIG. 8, when elements are displayed on a narrow screen as a four-grid element of two rows and two columns (as shown in the left figure in (3)), the elements may be displayed on a wide screen as one-row and four-column elements. Sizes, locations, spacings between different elements, and the like of these elements may be obtained based on the size of the display. As shown in (4) in FIG. 8, when elements are tabs, the tab elements are displayed on a narrow screen as shown in the left figure in (4), and when the tab elements are switched to display on a wide screen, the tab elements may be displayed as shown in the right figure in (4). When a screen on which an element is displayed is switched from a narrow screen to a wide screen, a size, a location, a spacing, and the like of the element may be obtained based on the size of the display. As shown in (5) in FIG. 8, when elements are four-column waterfalls, the elements are displayed on a narrow screen as shown in the left figure in (5), and when the elements are switched to display on a wide screen, the elements may be displayed as shown in the right figure in (5). When a screen on which an element is displayed is switched from a narrow screen to a wide screen or is switched from a wide screen to a narrow screen, a size, a location, a spacing, and the like of the element may be obtained based on the size of the display.

S704: The electronic device displays the third page on the display.

In some embodiments, after drawing an element and a layout in interface display content of the to-be-displayed application, the electronic device performs layer composition on one or more drawn layers to obtain an image frame. Then, the display driver at the kernel layer of the electronic device may receive the composited image frame, and drive the display to display the composited image frame. After the display displays the image frame, a corresponding display image may be sensed by human eyes.

In this way, when the electronic device needs to display an application interface that is not adapted to a current display size, the electronic device can adaptively obtain, without user perception and based on a ratio relationship between the original rendering size and the current display size, an interface layout adapted to the current display size. Therefore, the electronic device can provide a better application interface display effect for the user, to improve user experience.

In addition, for the application developer, in the application development process, only an interface layout that is adapted to one type of the display of the electronic device is developed, and deployment requirements of a plurality of types of electronic devices for the application can be met. This improves application development efficiency and reduces application development costs.

To describe more clearly the method provided in this embodiment of this application, an example in which the electronic device is a foldable mobile phone is used to provide a possible example of displaying an interface of an application on the foldable mobile phone.

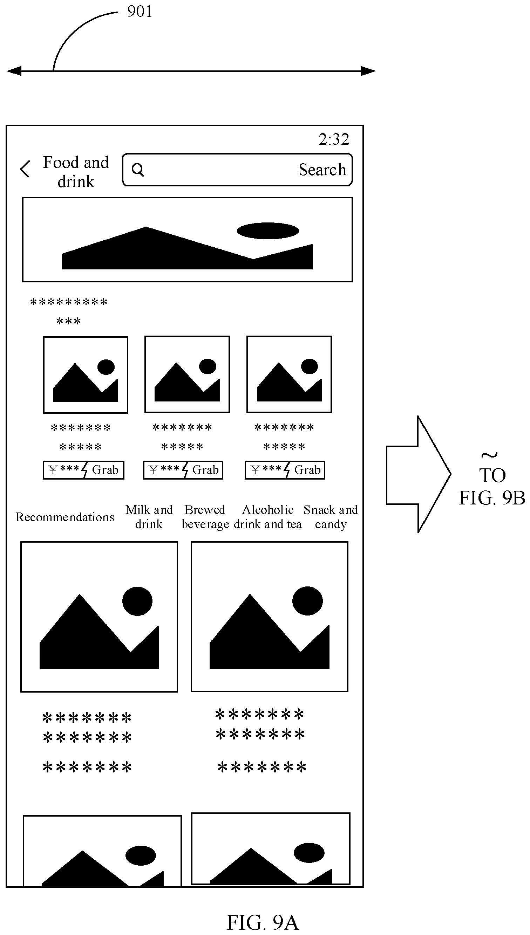

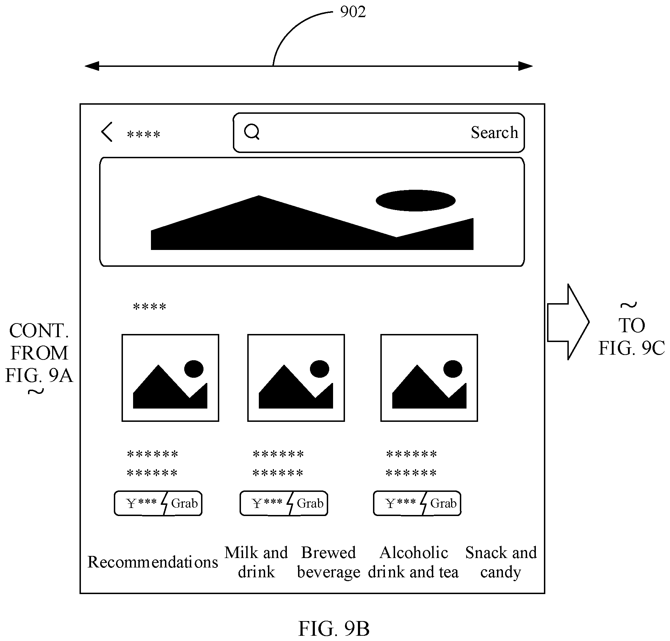

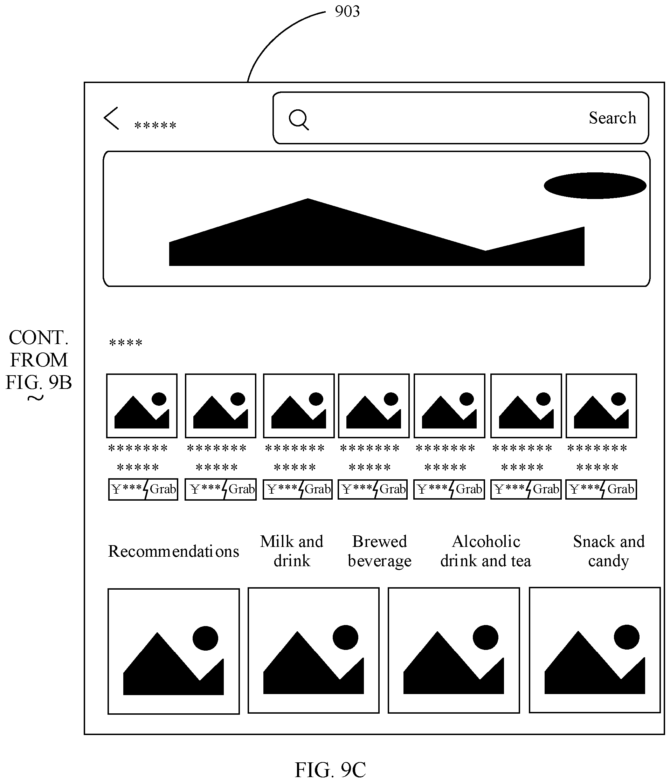

As shown in FIG. 9A, FIG. 9B, and FIG. 9C, if the foldable mobile phone is in an expanded state, namely, a wide-screen state, when the foldable mobile phone is triggered to display a user interface of the application, a process of displaying the user interface of the application is as follows: When the foldable mobile phone is in a narrow-screen state, a screen width of the foldable mobile phone is 375 pixels. When the developer designs the application, an original rendering size of the application is also 375 pixels. In this case, the foldable mobile phone performs rendering based on the width of 375 pixels, to obtain a page 901. Then, a zoom-in ratio obtained through calculation is 2 based on a width (750 pixels) of a wide screen existing when the foldable mobile phone is in the expanded state, and a page 902 is obtained by proportionally zooming in by a factor of two times the width of the page 901, element data, and layout data included in the page 901. Then elements in the page 902 are rearranged to obtain a page 903, and the foldable mobile phone displays the page 903 in the wide-screen state.

In some embodiments, in a scenario in which the size of the display of the electronic device is changeable, for example, the electronic device is the foldable mobile phone, after the electronic device displays the third page on the display, the electronic device determines that the display changes from a folded state to an expanded state, where a size of the display in the folded state is a first size, a size of the display in the expanded state is a second size, and the third page is a page displayed by the electronic device when the display is in the folded state.

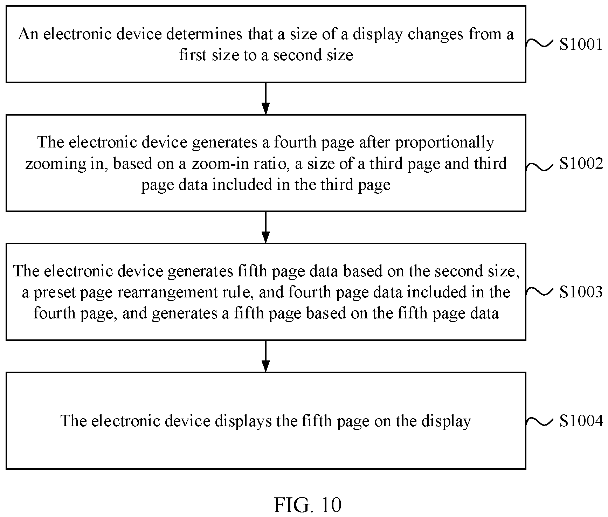

As shown in FIG. 10, the method further includes the following steps.

S1001: The electronic device determines that the size of the display changes from the first size to the second size.

The second size is greater than the first size.

For example, that the second size is greater than the first size mainly means that the width of the display increases. For example, the width of the display in the first size is 375 pixels, and the width of the display in the second size is 750 pixels. Alternatively, for example, that the second size is greater than the first size mainly means that the height of the display increases. For example, the height of the display in the first size is 375 pixels, and the height of the display in the second size is 750 pixels.

S 1002: The electronic device generates a fourth page after proportionally zooming in, based on the zoom-in ratio, the size of the third page and the third page data included in the third page.

The zoom-in ratio is determined based on the second size and the first size.

As shown above, the zoom-in ratio may be a ratio of the width in the second size to the width in the first size, or may be a ratio of the height in the second size to the height in the first size.

A specific implementation of this step is similar to that of S7022, and a difference is that in S7022, the size of the first page and the first page data (the original element data and the original layout data) included in the first page are zoomed out/in proportionally. In S1002, the size of the third page and the third page data (element data and layout data that are included in the third page) included in the third page are zoomed in proportionally.

S1003: The electronic device generates fifth page data based on the second size, the preset page rearrangement rule, and fourth page data included in the fourth page, and generates a fifth page based on the fifth page data.

For a specific implementation of this step, refer to step S703, and details are not described herein again.

S1004: The electronic device displays the fifth page on the display.

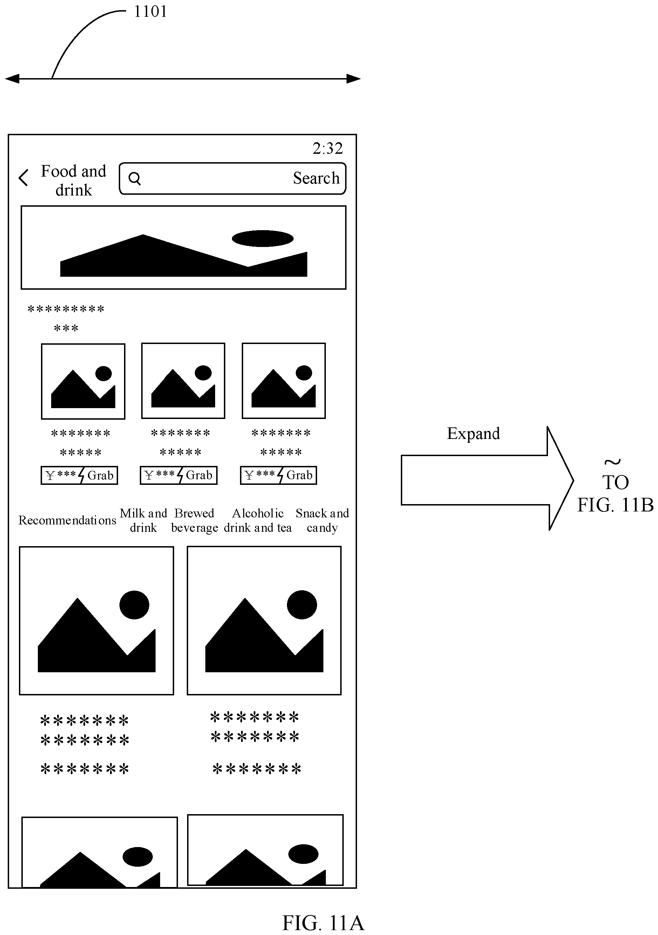

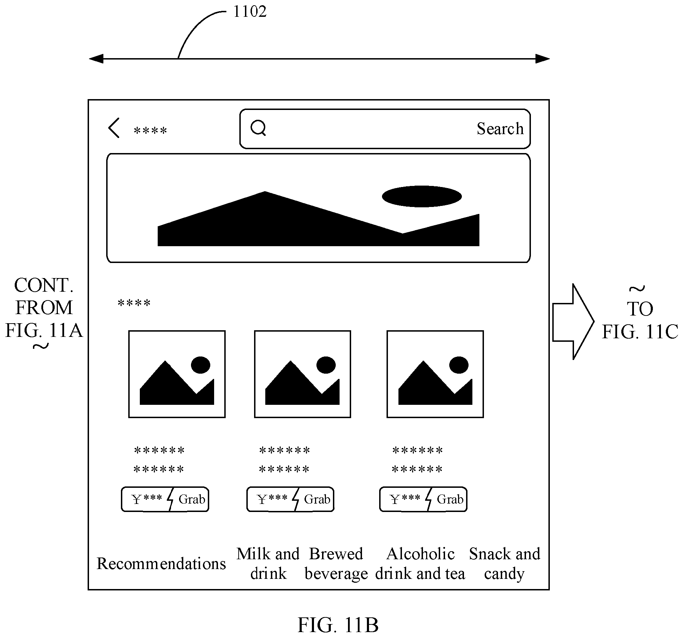

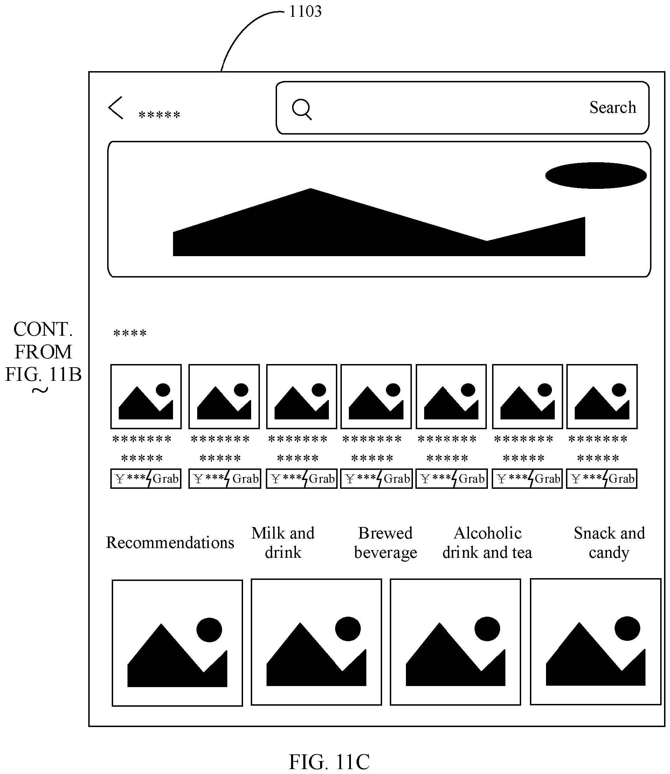

For example, as shown in FIG. 11A, FIG. 11B, and FIG. 11C, if the foldable mobile phone is in the folded state, namely, the narrow-screen state, when the foldable mobile phone is triggered to display the user interface of the application, then the user actively expands the screen, and the foldable display is displayed as the wide screen, a process of displaying the user interface of the application is as follows: When the foldable display is in the folded state, namely, the narrow-screen state, the width of the display is 375 pixels, and when the developer designs the application, the original display size is 375 pixels. In this case, the foldable mobile phone directly displays a page 1101 on the narrow screen after performing rendering based on the size of 375 pixels. Then, if the user actively expands the screen, to enable the screen to be displayed as the wide screen, and the width of the wide screen is 750 pixels, that the zoom-in ratio is 2 may be obtained based on a ratio of 750 pixels to 375 pixels. Based on the zoom-in ratio, the foldable mobile phone zooms in the page 1101 by a factor of two times proportionally, to obtain a page 1102, then rearranges elements in the page 1102 according to the method described in S703, to obtain a final page 1103, and displays the page 1103 on the wide screen.

In some embodiments, after the electronic device displays the third page on the display, the electronic device determines that the display changes from the expanded state to the folded state, where a size of the display in the expanded state is the first size, a size of the display in the folded state is the second size, and the third page is a page displayed by the electronic device when the display is in the expanded state.

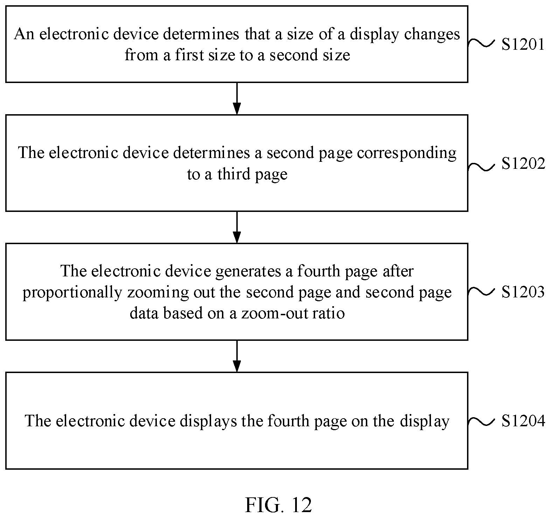

As shown in FIG. 12, the method further includes the following steps.

S1201: The electronic device determines that the size of the display changes from the first size to the second size.

The second size is less than the first size.

For example, that the second size is less than the first size mainly means that the width of the display decreases. For example, the width of the display in the first size is 750 pixels, and the width of the display in the second size is 375 pixels. Alternatively, for example, that the second size is less than the first size mainly means that the height of the display decreases. For example, the height of the display in the first size is 750 pixels, and the height of the display in the second size is 375 pixels.

S1202: The electronic device determines the second page corresponding to the third page.

In this step, the third page is a page obtained after the second page is rearranged. In this embodiment, the second page corresponding to the third page, namely, a page before rearrangement, is obtained, to implement "disabling rearrangement". After "disabling rearrangement" is performed, the zoom-in/out ratio is adjusted, and a new page may be obtained, as shown in the following step S1203. In a possible implementation, "disabling rearrangement" may be implemented by running program code. For example, a value of a parameter is set, so that the code used to implement a "rearrangement" process is not executed in a page rendering process, to implement "disabling rearrangement" and obtain the second page. In another possible implementation, in a process of performing S701 to S704, the electronic device stores pages generated in each phase, such as the first page, the second page, and the third page, to directly determine the second page corresponding to the third page.

S1203: The electronic device generates a fourth page after proportionally zooming out the second page and the second page data based on the zoom-out ratio.

The zoom-out ratio is determined based on the second size and the first size.

As shown above, the zoom-out ratio may be a ratio of the width in the second size to the width in the first size, or may be a ratio of the height in the second size to the height in the first size.

S 1204: The electronic device displays the fourth page on the display.

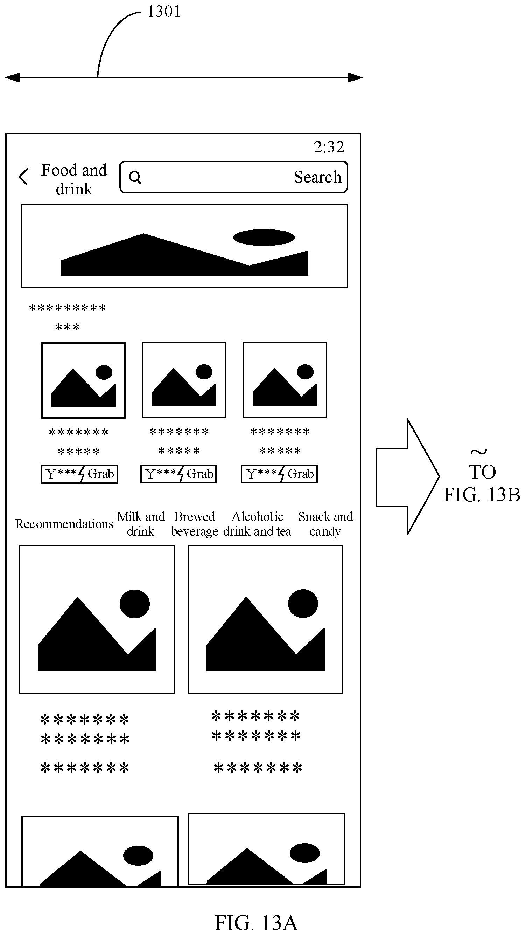

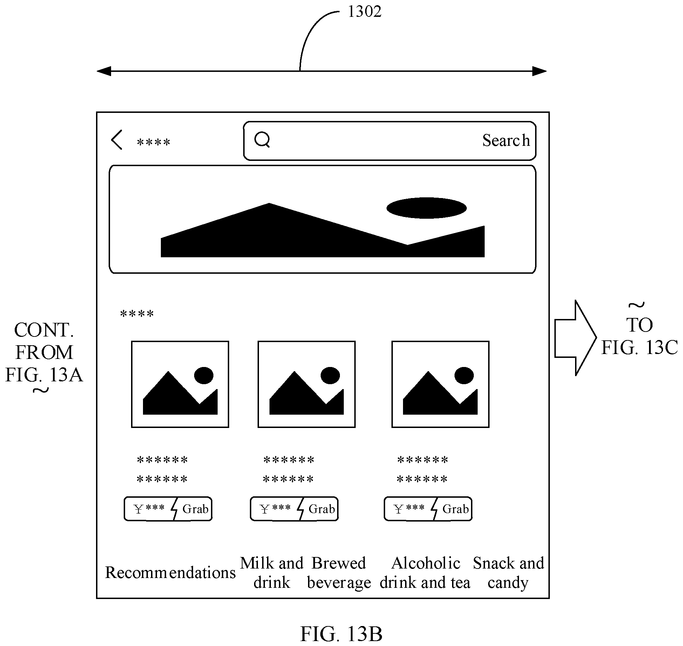

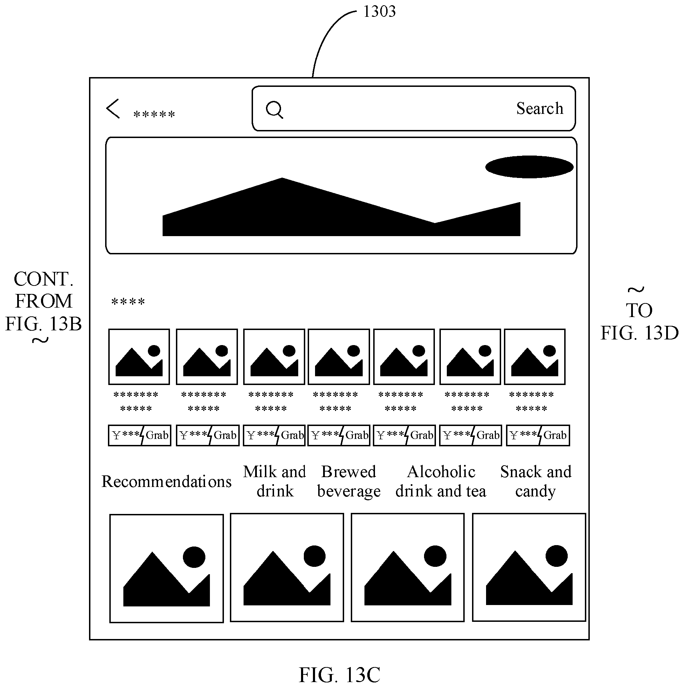

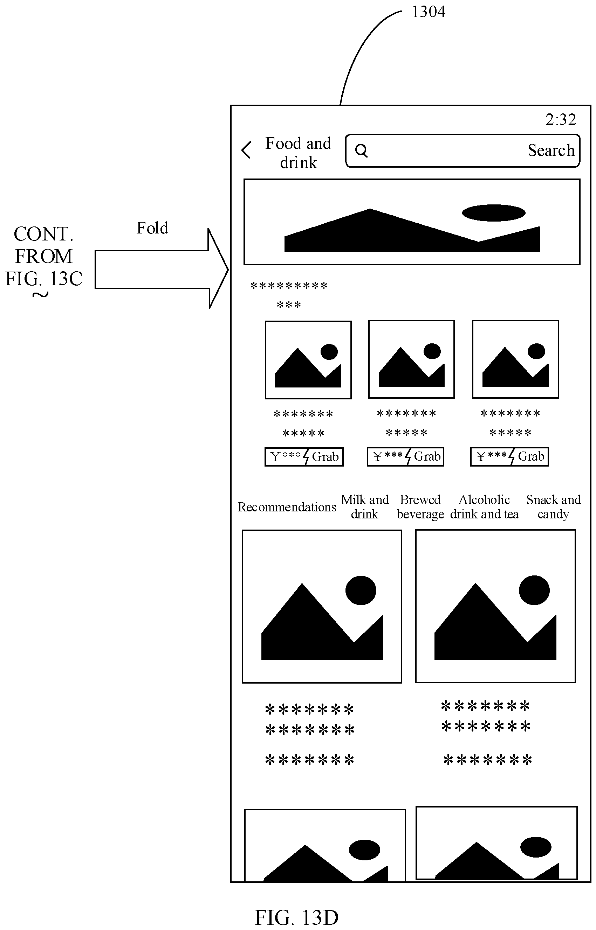

As shown in FIG. 13A, FIG. 13B, FIG. 13C, and FIG. 13D, if the foldable mobile phone is in the expanded state, namely, the wide-screen state, when the foldable mobile phone is triggered to display the user interface of the application, then the user actively folds the screen, and the foldable display is displayed in the narrow screen state, the process of displaying the user interface of the application is as follows: When the foldable mobile phone is in the narrow-screen state, the screen width of the foldable mobile phone is 375 pixels. When the developer designs the application, an original rendering size of the application is also 375 pixels. In this case, the foldable mobile phone performs rendering based on the width of 375 pixels, to obtain a page 1301. Then, a zoom-in ratio obtained through calculation is 2 based on a width (750 pixels) of a wide screen existing when the foldable mobile phone is in the expanded state, and a page 1302 is obtained by proportionally zooming in by a factor of two times the width of the page 1301, element data, and layout data included in the page 1301. Then elements in the page 1302 are rearranged to obtain a page 1303, and the foldable mobile phone displays the page 1303 in the wide-screen state. Then, if an operation of folding the display by the user is detected, that is, the foldable mobile phone changes from the expanded state to the folded state, and the display changes from the wide screen to the narrow screen, after the foldable mobile phone implements "disabling rearrangement" and adjusts the zoom-in/out ratio to 0.5, a final page 1304 is obtained, and the page 1304 is displayed on the narrow screen.

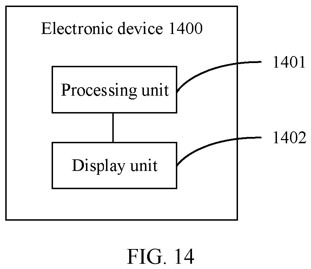

The foregoing describes in detail the display method provided in embodiments of this application with reference to FIG. 7 to FIG. 13A, FIG. 13B, FIG. 13C, and FIG. 13D. The following describes in detail a display apparatus provided in an embodiment of this application with reference to FIG. 14.

In a possible design, FIG. 14 is a schematic diagram of a structure of an electronic device according to an embodiment of this application. As shown in FIG. 14, an electronic device 1400 may include a processing unit 1401 and a display unit 1402. The electronic device 1400 may be configured to implement functions of the electronic device in the foregoing method embodiments.

Optionally, the processing unit 1401 is configured to: support the electronic device 1400 in performing S701, S7021, S7022, and S703 in FIG. 7; and/or support the electronic device 1400 in performing S1001, S1002, and S1003 in FIG. 10; and/or support the electronic device 1400 in performing S1201, S1202, and S1203 in FIG. 12.

Optionally, the display unit 1402 is configured to support the electronic device 1400 in performing S704 in FIG. 7, S1004 in FIG. 10, and S1204 in FIG. 12.

Optionally, the electronic device 1400 shown in FIG. 14 may further include a sending/receiving unit (not shown in FIG. 14), configured to: support the electronic device 1400 in detecting an operation used to trigger display of an application interface, and/or support the electronic device 1400 in communicating with another electronic device.

The sending/receiving unit may include a receiving unit and a sending unit, may be implemented by a transceiver or a transceiver-related circuit component, and may be a transceiver or a sending/receiving module. Operations and/or functions of the units in the electronic device 1400 are separately intended to implement corresponding procedures of the display method in the foregoing method embodiments. All related content of the steps in the foregoing method embodiments may be cited in function descriptions of the corresponding functional units. For brevity, details are not described herein again.

Optionally, the electronic device 1400 shown in FIG. 14 may further include a storage unit (not shown in FIG. 14), and the storage unit stores a program or instructions. When the processing unit 1401 and the display unit 1402 execute the program or the instructions, the electronic device 1400 shown in FIG. 14 can perform the display method in the foregoing method embodiments.

For technical effects of the electronic device 1400 shown in FIG. 14, refer to technical effects of the display method in the foregoing method embodiments. Details are not described herein again.

In addition to a form of electronic device 1400, the technical solutions provided in this application may also be a functional unit or a chip in the electronic device, or an apparatus that matches with the electronic device for use.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the display method in the foregoing embodiments.

An embodiment of this application further provides a computer program product. When the computer program product runs on a computer, the computer is enabled to perform the foregoing related steps, to implement the display method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the display method in the foregoing method embodiments.

The apparatus, the computer-readable storage medium, the computer program product, or the chip provided in embodiments of this application are all configured to perform the corresponding method provided above. Therefore, for beneficial effects that can be achieved, refer to beneficial effects in the corresponding method provided above, and details are not described herein again.

Methods or algorithm steps described in combination with the content disclosed in embodiments of this application may be implemented by hardware, or may be implemented by a processor by executing a software instruction. The software instruction may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application specific-integrated circuit (application specific-integrated circuit, ASIC).

Based on descriptions of the foregoing implementations, a person skilled in the art may clearly understand that, for ease and brevity of description, division of the foregoing functional modules is merely used as an example for description. In actual application, the foregoing functions can be allocated to different modules and implemented as required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. The described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the modules or units may be implemented in an electronic form, a mechanical form, or another form.

In addition, functional units in embodiments of this application may be integrated into one processing unit, each of the units may exist independently physically, or two or more units may be integrated into one unit. The integrated unit may be implemented in a form of hardware, or may be implemented in a form of software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement in the technical scope disclosed in this application shall fall in the protection scope of this application. Therefore, the protection scope of this application shall be subject to the protection scope of the claims.

## Claims

1. A display method, wherein the method comprises:
generating, by an electronic device, a first page based on first page data corresponding to a to-be-displayed application interface, wherein the first page data comprises original element data, original layout data, and an original rendering size;
if a size of a display of the electronic device does not match the original rendering size, generating, by the electronic device, a second page after proportionally zooming in/out a size of the first page, the original element data, and the original layout data based on a zoom-in/out ratio, wherein the zoom-in/out ratio is determined based on the size of the display and the original rendering size;
generating, by the electronic device, third page data based on the size of the display, a preset page rearrangement rule, and second page data comprised in the second page, and generating a third page based on the third page data; and
displaying, by the electronic device, the third page on the display.

2. The display method according to claim 1, wherein a value of the original rendering size is a preset value.

3. The display method according to claim 2, wherein the method further comprises:
parsing preset code in a process of rendering the first page, to obtain the preset value; and
setting the value of the original rendering size to the preset value.

4. The display method according to claim 3, wherein the preset code is scripting language JavaScript code.

5. The display method according to any one of claims 1 to 4, wherein after the displaying, by the electronic device, the third page on the display, the method further comprises:
determining, by the electronic device, that the size of the display changes from a first size to a second size, wherein the second size is greater than the first size;
generating, by the electronic device, a fourth page after proportionally zooming in, based on a zoom-in ratio, a size of the third page and the third page data comprised in the third page, wherein the zoom-in ratio is determined based on the second size and the first size;
generating, by the electronic device, fifth page data based on the second size, the preset page rearrangement rule, and fourth page data comprised in the fourth page, and generating a fifth page based on the fifth page data; and
displaying, by the electronic device, the fifth page on the display.

6. The display method according to claim 5, wherein the display of the electronic device is a foldable display; and
the determining, by the electronic device, that the size of the display changes from a first size to a second size comprises:
determining, by the electronic device, that the display changes from a folded state to an expanded state, wherein a size of the display in the folded state is the first size, a size of the display in the expanded state is the second size, and the third page is a page displayed by the electronic device when the display is in the folded state.

7. The display method according to any one of claims 1 to 4, wherein after the displaying, by the electronic device, the third page on the display, the method further comprises:
determining, by the electronic device, that the size of the display changes from a first size to a second size, wherein the second size is less than the first size;
determining, by the electronic device, the second page corresponding to the third page;
generating, by the electronic device, a fourth page after proportionally zooming out the second page and the second page data based on a zoom-out ratio, wherein the zoom-out ratio is determined based on the second size and the first size; and
displaying, by the electronic device, the fourth page on the display.

8. The display method according to claim 7, wherein the display of the electronic device is a foldable display; and
the determining, by the electronic device, that the size of the display changes from a first size to a second size comprises:
determining, by the electronic device, that the display changes from an expanded state to a folded state, wherein a size of the display in the expanded state is the first size, a size of the display in the folded state is the second size, and the third page is a page displayed by the electronic device when the display is in the expanded state.

9. The display method according to any one of claims 1 to 8, wherein the zoom-in/out ratio is a ratio of a width of the display to a width in the original rendering size; and/or
the zoom-in/out ratio is a ratio of a height of the display to a height in the original rendering size.

10. The display method according to any one of claims 1 to 9, wherein that a size of a display of the electronic device does not match the original rendering size comprises:
the width of the display of the electronic device is greater than the width in the original rendering size; and/or
the height of the display of the electronic device is greater than the height in the original rendering size.

11. An electronic device, comprising:
a processing unit, configured to generate a first page based on first page data corresponding to a to-be-displayed application interface, wherein the first page data comprises original element data, original layout data, and an original rendering size, wherein
the processing unit is further configured to: if a size of a display of the electronic device does not match the original rendering size, generate a second page after proportionally zooming in/out a size of the first page, the original element data, and the original layout data based on a zoom-in/out ratio, wherein the zoom-in/out ratio is determined based on the size of the display and the original rendering size; and
the processing unit is further configured to: generate third page data based on the size of the display, a preset page rearrangement rule, and second page data comprised in the second page, and generate a third page based on the third page data; and
a display unit, configured to display the third page on the display.

12. The electronic device according to claim 11, wherein a value of the original rendering size is a preset value.

13. The electronic device according to claim 12, wherein
the processing unit is further configured to: parse preset code in a process of rendering the first page, to obtain the preset value; and
set the value of the original rendering size to the preset value.

14. The electronic device according to claim 13, wherein the preset code is scripting language JavaScript code.

15. The electronic device according to any one of claims 11 to 14, wherein
the processing unit is further configured to determine that the size of the display changes from a first size to a second size, wherein the second size is greater than the first size;
the processing unit is further configured to generate a fourth page after proportionally zooming in, based on a zoom-in ratio, a size of the third page and the third page data comprised in the third page, wherein the zoom-in ratio is determined based on the second size and the first size;
the processing unit is further configured to: generate fifth page data based on the second size, the preset page rearrangement rule, and fourth page data comprised in the fourth page, and generate a fifth page based on the fifth page data; and
the display unit is further configured to display the fifth page on the display.

16. The electronic device according to claim 15, wherein the display of the electronic device is a foldable display; and
the processing unit is further configured to determine that the display changes from a folded state to an expanded state, wherein a size of the display in the folded state is the first size, a size of the display in the expanded state is the second size, and the third page is a page displayed by the electronic device when the display is in the folded state.

17. The electronic device according to any one of claims 11 to 14, wherein the processing unit is further configured to determine that the size of the display changes from a first size to a second size, wherein the second size is less than the first size;
the processing unit is further configured to determine the second page corresponding to the third page;
the processing unit is further configured to generate a fourth page after proportionally zooming out the second page and the second page data based on a zoom-out ratio, wherein the zoom-out ratio is determined based on the second size and the first size; and
the display unit is further configured to display the fourth page on the display.

18. The electronic device according to claim 17, wherein the display of the electronic device is a foldable display; and
the processing unit is configured to determine that the display changes from an expanded state to a folded state, wherein a size of the display in the expanded state is the first size, a size of the display in the folded state is the second size, and the third page is a page displayed by the electronic device when the display is in the expanded state.

19. The electronic device according to any one of claims 11 to 18, wherein the zoom-in/out ratio is a ratio of a width of the display to a width in the original rendering size; and/or
the zoom-in/out ratio is a ratio of a height of the display to a height in the original rendering size.

20. The electronic device according to any one of claims 11 to 19, wherein that a size of a display of the electronic device does not match the original rendering size comprises:
the width of the display of the electronic device is greater than the width in the original rendering size; and/or
the height of the display of the electronic device is greater than the height in the original rendering size.

21. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the display method according to any one of claims 1 to 10.

22. A graphical user interface system on an electronic device, wherein the electronic device comprises one or more memories, a display, and one or more processors, the one or more processors are configured to execute one or more computer programs stored in the one or more memories, and the graphical user interface system comprises a graphical user interface displayed when the electronic device performs the method according to any one of claims 1 to10.

23. A computer-readable storage medium, wherein the computer-readable storage medium comprises a computer program, and when the computer program is run on an electronic device, the electronic device is enabled to perform the method according to any one of claims 1 to 10.

24. A computer program product, wherein when the computer program product runs on a computer, the computer is enabled to perform the method according to any one of claims 1 to 10.

25. A chip system, comprising at least one processor and at least one interface circuit, wherein the at least one interface circuit is configured to: perform a sending/receiving function and send instructions to the at least one processor, and when the at least one processor executes the instructions, the at least one processor performs the method according to any one of claims 1 to 10.
